(19) Europäisches Patentamt / European Patent Office / Office européen des brevets

(11) **EP 2 175 799 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(51) Int Cl.:
***A61C 13/00*** *(2006.01)*

(21) Anmeldenummer: **08786668.7**

(22) Anmeldetag: **31.07.2008**

(86) Internationale Anmeldenummer:
**PCT/EP2008/060043**

(87) Internationale Veröffentlichungsnummer:
**WO 2009/016223 (05.02.2009 Gazette 2009/06)**

(54) **ROHLING MIT EINER CODIERUNG UND VERFAHREN ZUR HERSTELLUNG EINES ZAHNTECHNISCHEN FORMTEILS**

BLANK WITH ENCODING AND METHOD FOR MANUFACTURING A DENTAL MOULDED COMPONENT

ÉBAUCHE AVEC CODAGE, ET PROCÉDÉ DE FABRICATION DE PIÈCE DE DENTISTERIE FORMÉE

(84) Benannte Vertragsstaaten:
**AT CH DE DK FR GB LI**

(30) Priorität: **31.07.2007 DE 102007036279**
**12.03.2008 DE 102008013829**

(43) Veröffentlichungstag der Anmeldung:
**21.04.2010 Patentblatt 2010/16**

(73) Patentinhaber: **Sirona Dental Systems GmbH**
**64625 Bensheim (DE)**

(72) Erfinder: **NIEWIADOMSKI, Klaus**
**64653 Lorsch (DE)**

(74) Vertreter: **Sommer, Peter et al**
**PRIO Patentanwälte**
**Augustaanlage 22**
**68165 Mannheim (DE)**

(56) Entgegenhaltungen:
**WO-A-99/13796      WO-A-2005/002463**

**Beschreibung**

Technisches Gebiet

Die Erfindung betrifft einen Rohling zur Herstellung zahntechnischer Formteile, wobei der Rohling einen Rohlingskörper aus Zahnrestaurationsmaterial umfasst, aus welchem mittels eines Werkzeugs das Formteil durch Materialabtrag herausarbeitbar ist, wobei der Rohling eine Codierung mit mindestens einer Struktur als Informationsträger für Eigenschaften des Rohlingskörpers aufweist, wobei die Lage, die Abmessung oder die Art der Struktur durch Abtasten oder Vermessen des Rohlings feststellbar ist. Die Erfindung betrifft weiterhin ein Verfahren zur Herstellung eines zahntechnischen Formteils aus einem Rohling mit einem Rohlingskörper aus Zahnrestaurationsmaterial mittels eines Werkzeugs durch Materialabtrag, wobei zur Feststellung der Lage des Rohlingskörpers ein Touchiervorgang des Werkzeugs am Rohlingskörper vorgesehen ist.

Um ein zahntechnisches Formteil aus einem Rohling durch Materialabtrag herauszuarbeiten, muss das herauszuarbeitende Formteil vollständig in dem Rohlingskörper des Rohlings angeordnet sein. Zur Optimierung des Bearbeitungsprozesses ist es darüber hinaus von Vorteil, wenn der Rohling aus einer Vielzahl von Rohlingen mit unterschiedlich großem Rohlingskörper auswählbar ist, da sich dann das bereitzustellende Volumen des Rohlingskörpers an das herzustellende Formteil anpassen lässt. Da grundsätzlich jeder Rohlingskörper gegenüber dem Formteil ein Übermaß aufweist, ist es auch zweckmäßig, das Formteil innerhalb des Rohlingskörpers so zu platzieren, dass der Bearbeitungsprozess optimiert werden kann. Beispielsweise wird ein Formteil in einem länglichen Rohling an das äußere Ende des Rohlingskörpers gesetzt werden, um das Volumen des abzutragenden Materials zu verringern.

Stand der Technik

Im Stand der Technik ist bekannt, den Rohlingskörper des in die Bearbeitungsmaschine eingesetzten Rohlings zu vermessen, beispielsweise durch optische Vermessung mit einem Entfernungsmesser oder durch Anfahren der Bearbeitungswerkzeuge an den Rohlingskörper, was als Touchieren bezeichnet wird. Vermessen durch touchieren erfordert jedoch, dass das Werkzeug langsam auf den Rohlingskörper zugestellt wird, und zwar ausgehend von der größten möglichen Kontur des Rohlingskörpers. Besonders bei kleinen Rohlingskörpern ergeben sich große Abstände der Startposition des Touchiervorgangs zur tatsächlichen Oberfläche des Rohlingskörpers. Diese langen Touchierwege ergeben eine entsprechend lange Touchierzeit. Da während der gesamten Touchierzeit eine Drehzahlregelung stattfindet, um ein Touchieren festzustellen, können sich bei einer langen Touchierzeit Fehler in der Regelung ergeben, die ein vorzeitiges Touchieren signalisieren, ohne dass das Werkzeug tatsächlich an die Oberfläche des Rohlingskörpers herangeführt ist.

Aus der EP 0 160 797 ist ein Rohling zur Herstellung zahntechnischer Formteile bekannt, wobei der Rohling in einen Halter und in einen Rohlingskörper aus unterschiedlichen Materialien aufgeteilt ist. An dem Halter kann eine Referenzfläche so ausgebildet sein, dass Steuerinformationen für die Bearbeitung abgeleitet werden können, die von den Rohlingseigenschaften abhängen. Die Referenzfläche ist dazu so ausgebildet, dass über dem Umfang verteilt angeordnete Bereiche als binäre Codierung entweder der Umfangsfläche entsprechen oder abgeflacht sind.

Die Lage der dem Verschleiß unterworfenen Werkzeuge für die Bearbeitung des Rohlings wird dadurch justiert, dass die Werkzeuge an definierte Referenzflächen des Rohlings herangefahren werden. Diese Referenzflächen können sich wie in der EP 0 160 797 gezeigt am Halter befinden oder können sich, wie in der DE 196 12 699 gezeigt, am Rohlingskörper oder an einem eigenen Referenzkörper befinden, der am Rohling an einer mehr oder weniger beliebigen Stelle angebracht ist.

Aus der DE 103 30 758 A1 ist ein Rohling bekannt, der mindestens eine Lehre aufweist, die in ihrer Geometrie so ausgebildet ist, dass das für die Bearbeitung ausgewählte Werkzeug anhand seiner Außenkontur mittels der Lehre erkennbar ist. Hierzu wird ein Touchiervorgang verwendet.

In der DE 10 2004 063 417 A1 ist der Rohling so ausgebildet, dass mindestens zwei Lehren vorgesehen sind, die jeweils als Ausnehmungen gestaltet sind, wobei die Ausnehmungen in ihrer Geometrie so ausgebildet sind, dass das für die Bearbeitung ausgewählte Werkzeug anhand seiner Außenkontur mittels zumindest einer der Lehren erkennbar ist, wobei die mindestens zwei Lehren so am Rohling angeordnet sind, dass sie von den mindestens zwei Werkzeugen gleichzeitig anfahrbar sind, wenn der Rohling zur Bearbeitung in die Bearbeitungsmaschine eingespannt ist. Auch hier wird ein Touchiervorgang verwendet.

Eine Lösung zur Bestimmung der Größe des Rohlingskörpers besteht darin, der Bearbeitungsmaschine die Größe des Rohlingskörpers vorzugeben, unabhängig von der tatsächlichen Größe des in die Bearbeitungsmaschine eingebrachten Rohlings. Die Auswahl kann beispielsweise über einen Auswahldialog an der Bearbeitungsmaschine selbst erfolgen oder durch eine Software zur Steuerung der Bearbeitungsmaschine über einen PC. Das Einsetzen eines anderen als der Bearbeitungsmaschine vorgegebenen Rohlings kann aber zum Abscheren des Rohlingskörpers von einem Halter, zur Zerstörung der Werkzeuge oder zu schweren Schäden an der Bearbeitungsmaschine selbst führen.

Bislang ist der Anwender also selbst dafür verantwortlich, dass der in die Bearbeitungsmaschine eingesetzte Rohling mit dem gewählten Rohling bezüglich Hersteller, Material, Typ, Größe übereinstimmt. Der Anwender ist auch dafür verantwortlich, dass kein anderes als das für die eingesetzten Werkzeuge zulässige Material eingesetzt ist.

Aus dem Stand der Technik ist allerdings bekannt, dass die für einige Materialien notwendigen Schrumpfungsfaktoren alternativ zu einer manuellen Eingabe mit einem in die Bearbeitungsmaschine eingebauten Scanner in das System übernommen werden.

Für die optimale Steuerung der Bearbeitungsmaschine ist es vorteilhaft, sowohl Kenntnisse über das zu bearbeitende Material als auch über den Typ und die Größe des eingesetzten Rohlings zu erhalten. Beispielsweise kann ein zylindrischer Rohlingskörper oder ein quaderförmiger Rohlingskörper aus jeweils unterschiedlichen Materialien verwendet werden. Durch die Vielzahl der möglichen Materialien ist nicht jedes Material mit jedem der vorhandenen Werkzeuge bearbeitbar, so dass die Kenntnis über die Materialeigenschaft eigentlich unverzichtbar ist. Solche Informationen sind im in WO 99/13796 A offenbarten Rohling in Verbindung mit einer Datenbank codiert. Die Vorgabe der Eigenschaften des Rohlings an die Bearbeitungsmaschine, unabhängig von dem tatsächlich in die Bearbeitungsmaschine eingebrachten Rohling, kann durch Irrtum oder Umgehung der Empfehlungen zu Passungenauigkeiten des Formteils oder zu einer frühzeitigen Zerstörung der Werkzeuge führen. Darüber hinaus sind abhängig vom Material bei den Restaurationen Minimalwandstärken einzuhalten, so dass dann, wenn das eingesetzte Material nicht mit dem ausgewählten Material übereinstimmt, ein fehlerhaftes Formteil mit zu geringer Festigkeit entstehen kann. Zu geringe Wandstärken können auch zum Bruch des teilweise hergestellten Formteils bereits bei der Bearbeitung in der Bearbeitungsmaschine führen.

Die Aufgabe der vorliegenden Erfindung besteht darin, die langen Touchierzeiten und die damit einhergehende Verlängerung der Bearbeitungszeit zu verringern und eine vom Anwender unabhängige Kontrolle über die richtige Auswahl des in die Bearbeitungsmaschine eingesetzten Rohlings zumindest hinsichtlich der Abmessungen durchzuführen.

Darstellung der Erfindung Der erfindungsgemäße Rohling zur Herstellung zahntechnischer Formteile wird in Anspruch 1 definiert. Dabei kann die analoge Information einen Bruchteil einer analog zu beschreibenden Eigenschaft des Rohlings entsprechen und insbesondere aus der Größe der Abweichung der Struktur von einer vorgegebenen Referenzlage ermittelt oder unmittelbar entnommen werden. Als Eigenschaft kommt hier z.B. eine Festigkeit oder ein Vergrößerungsfaktor des Werkstoffes des Rohlings in Betracht, aber auch eine Information über die Lage weiterer Strukturen oder Referenzflächen.

Gemäß der vorliegenden Erfindung können die blockspezifischen Maße durch eine geometrische Gestaltung des Rohlingskörpers bzw. eines Rohlingskörperhalters selbst hinterlegt und für eine automatische Vorpositionierung des Werkzeugs bei einem Touchiervorgang am Rohling verwendet werden.

Die Kenntnis der Abmessungen des eingesetzten Rohlingskörpers verhindert das Abscheren des Rohlingskörpers, die Zerstörung der Werkzeuge sowie eine Beschädigung der Maschine selbst beim Einsetzen eines nicht bekannten Rohlingskörpers zuverlässig.

Gemäß einer vorteilhaften Weiterbildung kann die Codierung in Form einer geometrischen Struktur ausgebildet sein, deren Abmessung einer vorgegebenen mathematischen Funktion folgend mindestens einer Abmessung des Rohlingskörpers entspricht. Hierbei geben z.B. die Tiefen von Ausnehmungen im Rohlingskörpers bzw. im Radius des Rohlingskörperhalters eine analoge, maßstäbliche Abbildung der zugeordneten maximalen Abmessungen des Rohlingskörpers an. Die Abtastung der geometrischen Gestaltung der Strukturen erfordert wegen deren bekannter Lage wesentlich geringere Wege und Zeit als die Abtastung des Rohlingskörpers selbst, dessen Abmessungen zunächst unbekannt sind.

Durch die analoge Information am Rohling selbst ist ein Nachschlagen in Tabellen oder Datenbanken entbehrlich, es ist also keine externe Information über den Informationsgehalt der Messgröße an die Bearbeitungsmaschine zu übermitteln oder in dieser vorzuhalten.

Weitere Informationen wie Materialeigenschaften, Festigkeit, Farbe, Transluzenz, Schrumpfungsfaktor, etc. können gegebenenfalls zusätzlich über die Codierung hinterlegt werden, solange es sich um analog darstellbare Informationen handelt, etwa auch in Form einer Skala von 0 bis 100%.

Vorteilhafterweise kann eine weitere Struktur entsprechend einer Kontrollinformation über eine Funktion aus mindestens zwei Abmessungen von mindestens zwei Strukturen ausgebildet sein. Dabei können die mindestens zwei Strukturen auch gemeinsam vorgesehen sein, etwa in einer gemeinsamen geometrischen Ausgestaltung als Nut mit einer bestimmten Nutbreite und Nuttiefe.

Vorteilhafterweise kann eine Struktur mindestens eine Fläche aufweisen, wobei die Abweichung der Lage, der Abmessung oder der Art der Fläche von einer vorgegebenen Referenzfläche einer analogen Information über den Rohlingskörper entspricht. Mehrere Strukturen können zusammenwirken und beispielsweise eine Nut bilden.

Die vorgegebene Referenzfläche kann dabei die Umfangsfläche am Halter sein oder bei am Rohlingskörper angeordneten Strukturen eine Seitenfläche oder Stirnfläche des Rohlingskörpers.

Dabei kann die Struktur um eine Längsachse des Rohlings herum angeordnet sein, etwa auf einer Umfangsfläche des Halters oder auf einer Seitenfläche des Rohlingskörpers.

Vorteilhafterweise ist die Struktur in ihrer Lage von der Längsachse des Rohlings unabhängig und auf eine Herstellungsmittelachse bezogen. Bei der Herstellung der Struktur findet eine Bearbeitung statt und diese Bearbeitung führt dazu, dass eine Herstellungsmittelachse vorliegt. Durch die Entkopplung der Herstellungsmittelachse der Struktur von der Längsachse des Rohlings ist eine einfachere Herstellung möglich.

Vorteilhafterweise ist für die Bestimmung der Lage der Herstellungsmittelachse mindestens eine Referenzfläche vorgesehen.

Für die Bestimmung der Lage der Struktur gegenüber der Referenzlage kann eine Referenzstruktur mit einer Referenzlage vorgesehen sein. Damit ist die Lage der Struktur von der übrigen Geometrie des Rohlings unabhängig.

Vorteilhafterweise kann die Größe der Abweichung von der Referenzlage einer Information über mindestens eine geometrische Abmessung des Rohlingskörpers entsprechen.

Gemäß einer Weiterbildung kann die Referenzfläche der Struktur zur Längsachse des Rohlings hin in einer Vertiefung angeordnet sein, vorzugsweise als Nutgrund einer Nut.

Vorteilhafterweise kann am Rohling eine Referenzfläche vorgesehen sein für die Bestimmung der Exzentrizität der informationstragenden Strukturen zu einer Drehachse des in einer Bearbeitungsmaschine für die Bearbeitung des Rohlings aufgenommenen Rohlings. Der Zusammenhang zwischen der Referenzfläche und der Struktur ist in diesem Fall bekannt.

Vorteilhafterweise kann die Nutbreite und/oder die Nutlänge eine Information über die Eigenschaft des Rohlingskörpers darstellen.

Gemäß einer vorteilhaften Weiterbildung kann der Rohling einen Halter für den Rohlingskörper aufweisen und kann die Struktur auf diesem Halter angeordnet sein. Dadurch ist eine voneinander unabhängige Herstellung von Halter und Rohlingskörper möglich, wobei der Rohlingskörper selbst keine hochpräzisen Geometrien aufweisen muss. Die Strukturen können aber auch teilweise am Halter und teilweise am Rohlingskörper angeordnet sein, aber auch vollständig am Rohlingskörper. Vorteilhafterweise ist die Struktur gegenüber dem Rohlingskörper abgedeckt. Die Abdeckung kann dadurch erreicht werden, dass zwischen dem Halter und dem Rohlingskörper eine Abdeckscheibe vorgesehen ist.

Gemäß einer Weiterbildung befindet sich die Struktur auf einem an den Rohlingskörper oder an den Halter angespritzten Teil.

Es kann vorteilhaft sein, wenn sich die Struktur auf einem separat hergestellten Teil befindet, das zwischen dem Halter und dem Rohlingskörper oder am Halter selbst angeordnet ist. Bei dem separaten Teil kann es sich um ein Spritzgussteil, ein Stanzteil etc. handeln, das an dem Rohling, dem Rohlingskörperhalter oder zwischen dem Halter und dem Rohlingskörper angebracht wird.

Gemäß einer vorteilhaften Weiterbildung kann zumindest ein Teil der Strukturen am Rohlingskörper angeordnet sein, die Anordnung am Rohlingskörper hat den Vorteil, dass spezifische Eigenschaften des Rohlingskörpers an diesem selbst hinterlegt sind, so dass ein Standard-Halter verwendet werden kann.

Weiterhin kann es vorteilhaft sein, wenn der Rohling einen Halter und einen Rohlingskörper umfasst und wenn auf dem Halter eine Struktur vorgesehen ist, in der die Lage zumindest einer weiteren, am Rohlingskörper angeordneten Struktur oder einer Referenzfläche enthalten ist. Mit einer derartigen Ausbildung einer Struktur am Halter kann eine Information bereits beim Touchieren des Halters in einer bekannten, vorgegebenen Position über den Rohlingskörper gewonnen werden, und zwar insbesondere über die Lage der weiteren Strukturen oder Referenzflächen am Rohlingskörper. Dies ist dann von Vorteil, wenn der Halter hochpräzise gefertigt ist und einen Bezug zum Rohlingskörper aufweist. Der Touchiervorgang an die Struktur oder an die Referenzfläche des Rohlingskörpers kann dann zeitsparend erfolgen. Die Struktur kann in einer gegenüber einer Referenzfläche unterschiedlichen Höhe, oder Breite oder Länge ausgeführt sein. Auch die Winkellage kann eine Information liefern. Ein weiterer Gegenstand ist ein Verfahren zur Herstellung eines zahntechnischen Formteils aus einem Rohling mit einem Rohlingskörper aus Zahnrestaurationsmaterial mittels eines Werkzeugs durch Materialabtrag nach Anspruch 8. Vorteilhafterweise ist eine Begrenzung des Touchierweges in Abhängigkeit der festgestellten Größe, insbesondere mit Fehlermeldung, vorgesehen. Damit lässt sich eine Abweichung von einer erwarteten Touchierposition feststellen, die zum Beispiel auf einen bereits teilweise bearbeiteten Rohling schließen lässt.

Vorteilhafterweise kann nach einem erfolgreichem Touchiervorgang und /oder nach dem Bearbeiten des Rohlingskörpers eine Änderung der Struktur und/oder eine Herstellung einer weiteren Struktur durch das Werkzeug erfolgen. Damit lässt sich eine Information einbringen über den Bearbeitungszustand des Rohlings.

Ein weiterer Gegenstand der Erfindung betrifft ein Verfahren zur Herstellung eines zahntechnischen Formteils aus einem Rohling mit einem Rohlingskörper aus Zahnrestaurationsmaterial mittels eines Werkzeugs durch Materialabtrag nach Anspruch 11. Vorteilhafterweise kann zur Feststellung der Größe eine am Rohling vorgesehene Codierung mit mindestens einer geometrischen Struktur, deren Abmessung entsprechend einer Funktion analog mindestens eine Abmessung oder eine analoge Eigenschaft des Rohlingskörpers wiedergeben, erfasst werden. Besonders vorteilhaft ist es, wenn der erfasste Wert unter Verwendung einer vom touchierten Rohling unabhängigen Umrechnungsfunktion, die in der Bearbeitungsmaschine beziehungsweise in einer Steuerung für die Bearbeitungsmaschine hinterlegt ist, in eine Längenangabe umgewandelt wird. Vorteilhafterweise wird eine weitere Struktur erfasst, die eine Kontrollinformation über die Konsistenz der Information von mindestens zwei weiteren Strukturen darstellt. Auch hier können zwei Strukturen in einer gemeinsamen Ausgestaltung, etwa in einer Nut als Nutbreite und Nuttiefe, angeordnet sein.

Besonders vorteilhaft ist es, wenn bei einer falschen Kontrollinformation ein Abbruch der Bearbeitung erfolgt. Dadurch kann eine fehlerhafte Herstellung von vorneherein vermieden werden.

Vorteilhafterweise kann die Codierung zur Feststellung der Rohlingsgröße durch mindestens ein Werkzeug in einem Touchiervorgang abgetastet werden.

Die Lage der am Rohlingskörper angeordneten Struktur kann durch Erfassen einer am Halter oder am Rohlingskörper angeordneten Struktur bestimmt werden.

Eine Struktur kann auch als Kontrollinformation durch Veränderung mit den Werkzeugen als Merker für einen teilweise bearbeiteten Rohlingskörper dienen, z.B. für das bis dahin abgetragene Material.

Die Strukturen können kostengünstig genauso gefertigt werden wie eine schon vorhandene Positioniernut zur Positionierung des Rohlings in einer Bearbeitungsmaschine.

Wie aus dem Stand der Technik bekannt, können sich zusätzliche Informationen in der Codierung befinden, die einen Verweis auf eine Datenbank zur Ermittlung der zugehörigen Daten darstellen, etwa über den Hersteller.

Kurzbeschreibung der Zeichnungen

In der Zeichnung ist ein Ausführungsbeispiel der Erfindung dargestellt. Es zeigen:

Fig. 1   einen Rohling mit einem Halter und mit einem Rohlingskörper,

Fig. 2   den Halter aus Fig. 1 in Draufsicht in einer Referenzposition (Positioniernut 8 unten),

Fig. 3   den Halter aus Fig. 2 in einer um 30° gedrehten Position zur Erfassung eines ersten Paares von Strukturen,

Fig. 4   den Halter aus Fig. 2 in einer um -30° gedrehten Position zur Erfassung eines zweiten Paares von Strukturen,

Fig. 5   einen weiteren Halter mit einem zusätzlichen Paar von Strukturen mit zueinander bekanntem Abstand,

Fig. 6   ein Touchieren des Halters aus Fig. 5 im Bereich der zusätzlichen Strukturen,

Fig. 7   eine Prinzipskizze der bei dem Halter aus Fig. 5 zu berücksichtigenden geometrischen Verhältnisse,

Fig. 8   eine Ausgestaltung der Strukturen des Halters aus Fig. 5 im Detail,

Fig. 9   einen Halter mit einem mit Strukturen versehenen aufschiebbaren Ring.

Fig. 10   einen Halter, der in eine Bearbeitungsmaschine eingespannt ist,

Fig. 11   einen Rohling mit einer Struktur am Halter und mit weiteren Strukturen am Rohlingskörper,

Fig. 12   einen Rohling ohne Struktur am Halter nur mit Strukturen am Rohlingskörper,

Fig. 13 A-C   einen Rohling mit zwei Strukturen am Halter und mit weiteren durchgehenden Strukturen am Rohlingskörper,

Fig. 14 A,B   einen Rohling mit Lage und Winkel beinhaltenden Strukturen am Rohlingskörper.

Fig. 15 A,B   einen Rohling mit einer Struktur mit Doppelfase,

Fig. 16 A,B   einen Rohling mit einer nach außen gerichteten Struktur. Ausführungsbeispiel der Erfindung

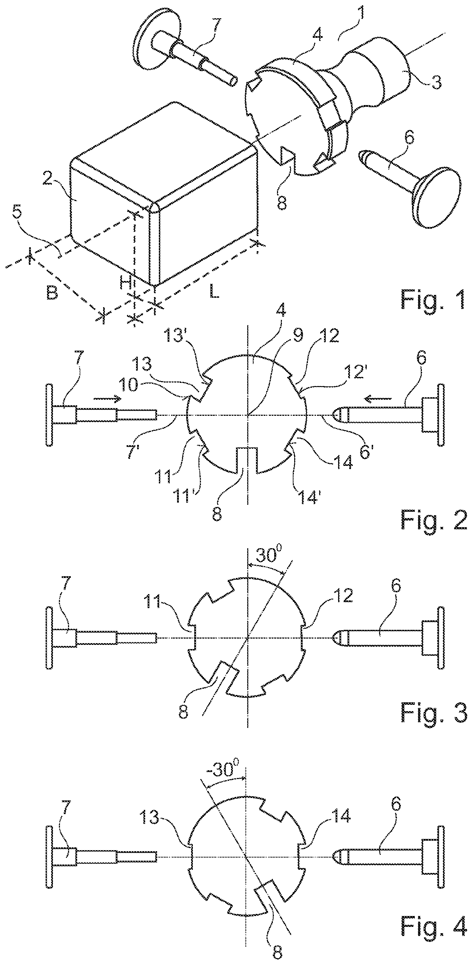

In Fig. 1 ist ein Rohling mit einem an einem Halter 1 befestigten Rohlingskörper 2 dargestellt, wobei der Rohlingskörper 2 zum Zweck der besseren Darstellung des Halters 1 vom Halter 1 abgelöst dargestellt ist.

Der Halter 1 umfasst einen Schaft 3 und einen Teller 4, wobei der Schaft 3 dazu bestimmt ist, den Halter 1 in einer nicht dargestellten Bearbeitungsmaschine zu befestigen und der Teller 4 dazu bestimmt ist, eine ausreichende Verbindungsfläche zu dem Rohlingskörper 2, der in der Regel aus einem anderen Material als der Halter 1 besteht, bereitzustellen. Es ist aber auch möglich, den Halter und den Rohlingskörper einstückig auszubilden.

Zu beiden Seiten des Halters 1, also jeweils auf einer Seite einer Längsachse 5 des Halters 1, ist jeweils ein Werkzeug 6, 7 angeordnet, wobei das Werkzeug 6 als Zylinderschleifer mit einer Kegelspitze und das Werkzeug 7 als zylindrischer Stufenschleifer ausgebildet sein kann. Die Form der Werkzeuge spielt für die vorliegende Erfindung jedoch keine wesentliche Rolle.

In dem Teller 4 ist eine Nut 8 für die Positionierung des Halters 1 und damit des mit dem Halter 1 verbundenen Rohlingskörpers 2 in der Bearbeitungsmaschine vorgesehen. Anstelle der Nut 8 im Teller 4 kann auch eine Positionierhilfe am Schaft 3 angeordnet sein, etwa eine Ausnehmung an dem Ende des Halters 3, die mit einem Vorsprung in der Haltevorrichtung einer Bearbeitungsmaschine zusammenwirkt.

In Fig. 2 ist dargestellt, wie ausgehend von einem bekannten Drehzentrum 9 des in einer nicht dargestellten Bearbeitungsmaschine eingespannten Halters 1 eine Referenzposition für die Spitze des jeweiligen Werkzeugs 6, 7 festgelegt wird. Dies geschieht dadurch, dass die Werkzeuge 6, 7 mit geringer Drehzahl und Energie sich um Ihre Längsachse drehen und vom Halter 1 aus gesehen in radialer Richtung auf den Halter hin bewegt werden. Die Werkzeuge stoppen bei Berührung an der Umfangsfläche 10 des Tellers 4 und die Positionen der Werkzeuge werden gespeichert. Aus den Positionen beim Stoppen der Werkzeuge 6,7 wird die Position der beiden Schleifer bezüglich des Halters 1 bestimmt. Dieser Vorgang wird als Touchiervorgang bezeichnet.

Diese Positionsbestimmung der Spitze des Werkzeugs 6, 7 ist deshalb vorteilhaft, weil gerade die Werkzeugspitze einem Verschleiß unterliegt, der zu fehlerhaften Bearbeitungsergebnissen einerseits bzw. zu fehlerhaften Ergebnissen beim Abtasten des Halters 1 führen kann. Alternativ zu einem Abtasten, d. h. einer Berührung, kann auch eine Berührungslose Vermessung erfolgen, etwa eine optische Vermessung.

Im vorliegenden Ausführungsbeispiel ist der Durchmesser des Tellers 4 sehr genau gefertigt, d.h. mit einer Toleranz von 10 $\mu$m.

Neben der relativ genauen Dimensionierung des Durchmessers des Tellers 4 ist auch die Exzentrizität des Tellers 4 bezüglich eines einer Bearbeitungsmaschine zugeordneten Drehzentrums 9 des in die Bearbeitungsmaschine eingespannten Halters 1 von Bedeutung, wobei jedoch die Ermittelung dieser Exzentrizität nach dem Stand der Technik für die vorliegende Erfindung als bekannt vorausgesetzt wird.

In Fig. 2 ist zu erkennen, dass neben der Nut 8 zur Positionierung des Halters in der Bearbeitungsmaschine eine Codierung mit zwei Paaren von gegenüberliegend angeordneten Strukturen 11,12 und 13,14 vorgesehen ist, wobei die Strukturen 11-14 als Vertiefung in der Umfangsfläche 10 des Tellers 4 ausgebildet sind und wobei in den Strukturen 11 bis 14 Flächen 11'-14' vorhanden sind. Die Strukturen 11 bis 14 sind dabei so über den Umfang verteilt in der Umfangsfläche 10 angeordnet, dass sie in der dargestellten Referenzposition außerhalb des Wirkungsbereichs der Werkzeuge 6, 7 entlang der Achsen 6', 7' liegen. Die Strukturen 11-14 befindet sich dabei in einem vorgegebenen und der Bearbeitungsmaschine bekannten Winkel bezüglich der Nut 8 zur Positionierung des Halters 1 in der Bearbeitungsmaschine.

Die Codierung kann in Form von radialen und/oder axialen Strukturen, die über den Umfang verteilt sein können, ausgebildet sein.

In Fig. 3 ist der Halter 1 aus Fig. 2 um einen Winkel von 30° im Uhrzeigersinn verdreht, so dass die Nut 8 aus ihrer Mittellage zum Bearbeitungswerkzeug 7 hin gerückt ist. In dieser Position ist das erste Paar der Strukturen 11, 12 in den Wirkungsbereich der Werkzeuge 7, 6 gebracht, so dass beim Zustellen der Werkzeuge 6, 7 eine Berührung der Werkzeuge 6, 7 im Bereich der Flächen 12', 11' der Strukturen 12, 11 stattfindet.

Durch Positionsvergleich der Werkzeuge 6, 7 bei Erreichen der Flächen 12', 11' der Strukturen 12, 11 gegenüber der Referenzposition an der Umfangsfläche 10 lassen sich für die Abmessung der Strukturen 11, 12 zwei analoge Messwerte ableiten. Der mit dem Werkzeug 6 und der Struktur 12 festgestellte analoge Messwert kann z.B. einer maßstabsgerechten Länge des Rohlingskörpers 2 entsprechen, also multipliziert um einen vorbekannten Vervielfacher, so dass die Länge einer Funktion folgend aus dem Messwert ermittelt wird. Der mit dem Werkzeug 7 und der Struktur 11 festgestellte zweite Messwert kann zum Beispiel die Breite des Rohlingskörpers 2, wiederum gegebenenfalls unter Anwendung einer Funktion durch Multiplikation mit einem vorbekannten Vervielfacher, darstellen. Der jeweilige mit dem Vervielfacher modifizierte Messwert kann im Rahmen der analogen Funktion gegebenenfalls mit einem vorbekannten Offset versehen werden um die Genauigkeit zu erhöhen. Die zugrundeliegende Funktion wäre in diesem Fall eine Geradengleichung mit einer Steigung, die dem Vervielfacher entspricht und mit einem Achsenabschnitt, der dem Offset entspricht. Die Zuordnung einer Größe zu dem analogen Messwert kann auch über eine andere mathematische Funktion erfolgen.

Auch aus dem Abstand der beiden Strukturen 11, 12 eines Paares zueinander kann ein Messwert genommen werden. Allerdings hat dies den Nachteil, dass dann mit zwei Strukturen 11, 12 nur ein einziger Messwert erhalten wird anstelle von möglichen zwei Messwerten.

In Fig. 4 ist der Halter 1 aus Fig. 2 um einen Winkel von 30° gegen den Uhrzeigersinn um das Drehzentrum 9 verdreht, so dass das zweite Paar von Strukturen 13, 14 im Wirkungsbereich der Werkzeuge 6, 7 liegt. Durch Heranführen der Werkzeuge 6, 7 auf die Flächen 14', 13' der Strukturen 14, 13 lassen sich wiederum zwei Messwerte gewinnen, die als analoge Werte z.B. bei der Struktur 13 eine Höhe h des Rohlingskörpers 2 enthalten oder im Fall des Werkzeugs 7 und der Struktur 14 einen Messwert für eine Kontrollgröße für die Summe der Messwerte aus Höhe, Breite und Länge der Strukturen 11, 12 und 13.

Im vorbeschriebenen Ausführungsbeispiel entspricht der mit dem Werkzeug an einer Struktur festgestellte Messwert einer analogen Information. Beispielsweise kann einer Eindringtiefe von 1,3 mm in die Struktur 12 eine Länge L des Rohlingskörpers 2 von 26 mm zugeordnet sein. Mit zunehmender Eindringtiefe wächst auch der Messwert an und damit die entsprechende Länge des Rohlingskörpers 2. Beispielsweise kann bei einer Eindringtiefe von 1,6 mm auf eine Länge L des Rohlingskörpers 2 von 32 mm geschlossen werden. Der Umrechnungsfaktor zwischen der gemessen Differenz der Spitze des Werkzeugs an der Umfangsfläche gegenüber der Struktur 12 ist hier mit dem Faktor 20 zu multiplizieren. Für die Breite und die Höhe kann derselbe oder ein anderer Umrechnungsfaktor in der Bearbeitungsmaschine vorgesehen sein, etwa 10 für die Höhe und 15 für die Breite. Bei einer Messungenauigkeit von insgesamt 50 $\mu$m beträgt der Fehler im umgerechneten Längenmaß dann höchstens 1 mm, sodass der Fehler bei der Vorpositionierung der Werkzeuge an dem Rohlingskörper auf dieses Maß beschränkt ist.

Der Kontrollwert berechnet sich in diesem Fall für einen Rohlingskörper mit einer Länge L=32mm, einer Breite b=12mm und einer Höhe h=10mm unter Anwendung der Faktoren zu (0,8mm+1,6mm+1,0mm=3,4mm). Wenn dieser Wert außerhalb des in der Struktur hinterlegbaren Wertes ist, kann dieser Wert noch durch einen auf den Korrekturwert bezogenen Faktor 2 oder 4 geteilt werden.

Die Erfassung der Codierung am Rohling kann dann besonders schnell erfolgen, wenn die Lage der Strukturen genau bekannt ist, sodass die Werkzeuge nahe an die Strukturen gebracht werden können, bevor der eigentliche Touchiervorgang beginnt. Der Zeitverlust durch diese zusätzlichen Vermessungen ist gegenüber dem Zeitgewinn beim anschließenden Touchieren des Rohlingskörpers gering, insbesondere bei kleinen Blöcken, bei denen von der Startposition für den größtmöglichen Rohlingskörper aus der langsame Touchiervorgang abläuft.

Zur Bestimmung der Startposition des Werkzeugs für den Touchiervorgang am Rohlingskörper 2 ist darüber hinaus dessen Herstellungstoleranz für die Abmessungen und dessen Ausrichtung auf dem Halter 1 zu berücksichtigen, was dem Stand der Technik entspricht.

Die Startposition der Vorpositionierung des Werkzeugs für den Touchiervorgang kann darüber hinaus auch einen voreingestellten Offset aufweisen. Für die Startposition des Werkzeugs ergibt sich dann ein Abstand des Werkzeugs von der Drehachse der Bearbeitung aus dem analogen Messwert der Struktur multipliziert mit dem Umrechnungsfaktor zuzüglich des Offsets. Der Offset kann dabei zweckmäßigerweise zwischen 1 und 5 mm liegen und reduziert den Fehler bei größeren Umrechnungsfaktoren.

Die Strukturen 11 bis 14 können anstelle der dargestellten Ausnehmungen auch Erhöhungen sein. Die Ausgestaltung als Ausnehmung hat den Vorteil, dass das Werkzeug zunächst mit großer Geschwindigkeit bis in die Nähe der Umfangsfläche 10 zugestellt werden kann und erst dann ein langsames Annähern des Werkzeugs an die Struktur erfolgt.

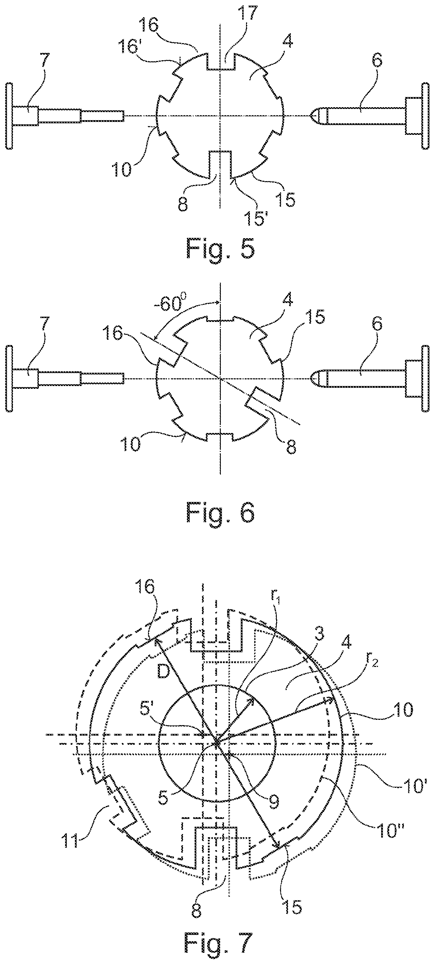

In Fig. 5 ist ein weiteres Ausführungsbeispiel des Halters 1 dargestellt. Der Teller 4 hat auf seiner Umfangsfläche 10 neben den bereits aus Fig. 2 bekannten zwei Paaren von Strukturen ein drittes Paar von Strukturen 15, 16, die sich wiederum gegenüber liegen und die auf einer von der Ausnehmung 8 und den aus Fig. 2 bekannten Strukturen unbeeinträchtigten Teil der Umfangsfläche 10 liegen. Im vorliegenden Fall sind die Strukturen 15, 16 so ausgebildet, dass sie eine Bezugsreferenz für die Tiefeninformation der anderen Strukturen bereitstellen und darüber hinaus einen innerhalb einer engen Toleranz liegenden Abstand zueinander aufweisen können. Dieser Toleranzbereich beträgt wiederum etwa 10 $\mu$m. Das bedeutet, dass die Strukturen 15, 16 sehr genau zu den zwei Paaren von Strukturen positioniert sind, so dass aus den Strukturen 15, 16 eine Art Nulllage für die anderen Strukturen abgeleitet werden kann.

Durch das in Fig. 6 dargestellte Anfahren des um einen Winkel von etwa 60° gegen den Uhrzeigersinn gedrehten Halters 1 im Bereich der Strukturen 15, 16 mittels der Werkzeuge 6, 7 wird die Bezugsreferenz für die anderen Strukturen bereitgestellt. Aus den bekannten Positionen der Berührung der Spitze der Werkzeuge 6, 7 mit den Strukturen 15, 16 lässt sich eine Korrektur für die Tiefeninformation der Strukturen 11-14 ermitteln. Dies ist z.B. dann von Vorteil, wenn die Position des für die Herstellung der Strukturen verwendeten Werkzeuges nicht genau auf den Radius des Tellers 4 abgestimmt ist.

Der Halter 1 ist üblicherweise als Drehteil hergestellt, wobei der in Fig. 7 dargestellte Radius r1 des Schafts 3 vergleichsweise grobe Toleranzen aufweisen kann, wohingegen der Radius r2 der auf dem Teller 4 angeordneten Umfangsfläche 10 besonders genau sein soll, vorzugsweise in einem Toleranzbereich von höchstens 10 $\mu$m.

Bei einem möglichen exzentrischen Einspannen des mit den Strukturen zu versehenden Halters 1 in eine nicht dargestellte Aufnahme einer Bearbeitungsmaschine mit dem Drehzentrum 9 ergibt sich bei einer Drehung des Halters 1 um das Drehzentrum 9 eine Lageveränderung der Umfangsfläche 10 zur Umfangsfläche 10' hin, punktiert dargestellt, welche die Genauigkeit nachteilig beeinflusst.

Aus diesem Grund kann es zweckmäßig sein, zwischen der Mittelachse 5 des Halters 1 und dem Drehzentrum 9 der nicht dargestellten Bearbeitungsmaschine eine Beziehung herzustellen. Dies ist mit den Messwerten von Fig. 5 und Fig. 6 aus dem Stand der Technik ausreichend bekannt.

Die Herstellung der erfindungsgemäßen Strukturen erfolgt jedoch nicht unbedingt durch Drehen, sondern kann auch durch Fräsen oder Bohren erfolgen, wofür das den späteren Halter bildende Drehteil aus der Drehmaschine herausgenommen und in eine Fräsmaschine oder in eine Bohrmaschine eingespannt wird. Selbstverständlich ist es auch möglich, das Drehteil in der Drehmaschine zu belassen, wenn die Drehmaschine mit einer Fräsmaschine oder mit einer Bohrmaschine gekoppelt ist. Von Bedeutung ist hier die Tatsache, dass das Koordinatensystem der Fräs- oder Bohrmaschine nicht immer exakt auf das Koordinatensystem der Drehmaschine abgestimmt ist, dass also die Absolutposition des Drehteils in der Drehmaschine von der Fräs- oder Bohrmaschine anders angenommen wird, dargestellt durch die gestrichelte Linie der Umfangsfläche 10" mit einem verschobenen Drehzentrum 5' um die Herstellungsachse 5. Die von der Fräs- oder Bohrmaschine herstellte Struktur 17 oder die Struktur 11 werden daher bezogen auf die Umfangsfläche 10" hergestellt und nicht bezogen auf die Umfangsfläche 10. Dieser Fehler lässt sich dadurch feststellen, dass die Strukturen 15, 16 mit einem zueinander genau bekannten Abstand D hergestellt sind, wobei die Strukturen so ausgebildet sind, dass sie den Toleranzbereich der Fehlpositionierung bei der Bearbeitung durch die Fräs- oder Bohrmaschine abdecken. Im Ausführungsbeispiel sind die Strukturen 15, 16 als Vertiefung ausgebildet, wobei der Grund der Vertiefung jeweils eine Referenzfläche darstellt, deren Position später beispielsweise mittels des Werkzeugs zur Bearbeitung des Rohlingskörpers festgestellt wird.

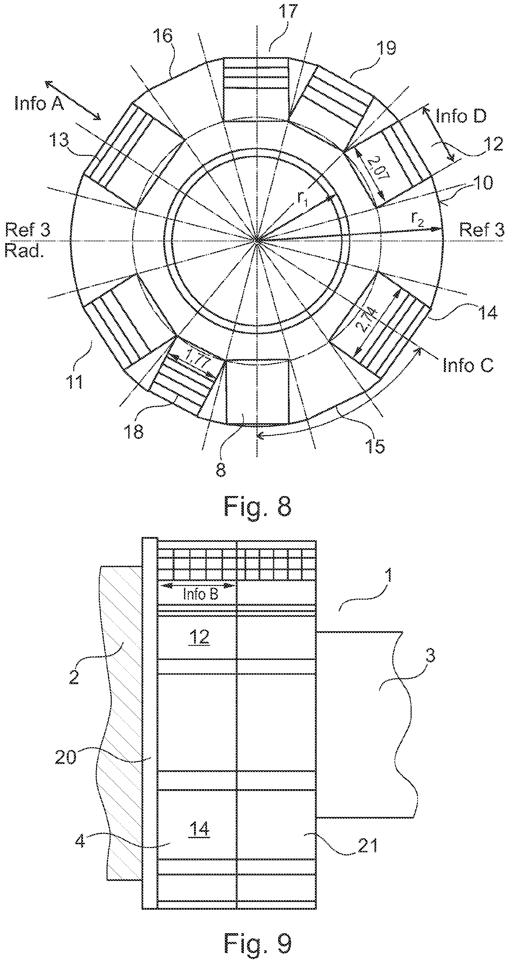

In Fig. 8 ist ein Ausführungsbeispiel für eine Ausgestaltung der Strukturen dargestellt. Die für die Positionierung erforderliche Ausnehmung 8 ist als Nut ausgebildet, ebenso wie die Strukturen 11 bis 14 und 17 bis 19. Die Information der Struktur kann in der Tiefe der Nut, in der Breite der Nut, in der Länge der Nut oder in der Winkelanordnung der Nut niedergelegt sein. So ist in der Struktur 13 eine Information A in der Tiefe enthalten, in der Struktur 14 eine Information C in einem Winkel y, dessen Wert durch die Mitte zwischen den beiden Seitenwänden der Struktur 14 bestimmt ist, und bei der Struktur 12 ist eine Information D in der Breite der Struktur enthalten. Jede dieser Strukturen kann eine zusätzliche Information B (Fig. 9) in der Länge und/oder eine zusätzliche Information A in der Tiefe der Struktur enthalten.

Die Nuten der Strukturen 8, 11-14, 17-19 haben z.B. parallele Seitenwände und einen dazu rechtwinkligen Nutgrund.

Sämtliche Strukturen befinden sich in einem definierten Winkel bezüglich der Nut 8 zur Positionierung, wobei anstelle der Nut 8 zur Positionierung am Teller auch eine Positionierung am Schaft 3 vorgesehen sein kann. Wesentlich ist hier, dass der Halter 1 in einer genau vorbestimmten Winkellage in der Bearbeitungsmaschine gehalten wird.

Die beiden Referenzflächen der Strukturen 15,16 stellen jeweils eine Fläche in etwa senkrecht zur Drehachse dar, deren Abstand zueinander bekannt ist. Dadurch, dass die Lage dieser Strukturen 15, 16 z.B. mit einem Touchiervorgang festgestellt wird, lässt sich in Verbindung mit den Daten des bislang erhaltenen Drehzentrums 9 aus dem Standard-Touchiervorgang die Mittelachse des Halters 1 bis auf wenige μm genau bestimmen.

Die Strukturen der Codierung können im Fall der dargestellten Ausnehmungen 11-14 und 17-19 sowie der Referenzflächen der Strukturen 15,16 mit dem gleichen Werkzeug der Fräs- oder Bohrmaschine wie zur Herstellung der Nut 8 für die Positionierung des Halters 1 hergestellt werden. Hierdurch ist eine präzise Zuordnung der Höheninformationen ohne eine übermäßig hohe Fertigungsgenauigkeit der Ausnehmungen bezogen auf die Umfangsfläche 10 des Halters 1 möglich.

Bei hinreichend genauer Fertigung können die beiden Strukturen 15, 16 statt als Referenz auch als Informationen ausgeführt sein, indem die Lage der Referenzflächen festgestellt wird und aus der Lage eine vorgegebene Bedeutung festgestellt wird.

Die Ausnehmungen sind in ihrer Dimension so gewählt, dass das Werkzeug der Bearbeitungsmaschine, für den Rohlingskörper in der Regel ein Schleifer oder ein Fräser, trotz einer vorhandenen Ungenauigkeit der Positionierung und Toleranzen in der Bearbeitungsmaschine immer innerhalb der Ausnehmung Platz findet. Als Beispiel sind die Breiten der Strukturen 18, 12, 14 von 1,77 mm, 2,07 mm und 2,74 mm angegeben bei einem Werkzeugdurchmesser von 1,5 mm.

Die Tiefe der Ausnehmungen, relativ zur Umfangsfläche 10 bzw. zu den Strukturen 15,16 des Halters 1, repräsentieren die zugeordneten analogen Informationen. Diese Tiefen liegen in einem Bereich von 0,5-2,5 mm gegenüber der Umfangsfläche 10.

Die Strukturen können in Längsrichtung, also in Richtung der Längsachse 5 vor der Verbindungsfläche zwischen dem Halter 1 und dem Rohlingskörper 2 enden, um an der Oberseite des Tellers 4 eine durchgängige Klebefläche zu erhalten.

In Fig. 9 weist der Halter 1 zusätzlich zu dem Schaft 3 und dem Teller 4 eine Abdeckscheibe 20 auf, welche die am Teller 4 angebrachten Strukturen 12, 14 gegen Eindringen von Klebstoff bei der Verbindung mit dem nur angedeuteten Rohlingskörper 2 verhindert.

Zusätzlich zu den oder anstelle der Strukturen 12, 14 im Teller 4 kann ein Ring 21 vorgesehen sein, der über den Schaft 3 zum Teller 4 hin geschoben wird und gegebenenfalls mit diesem verbunden wird. In dem Ring 21 können weitere oder dieselben Strukturen 11-19 enthalten sein, um weitere oder dieselben Informationen bereitzustellen.

Es ist auch möglich, allein die Scheibe 20 mit dem Schaft 3 zu verbinden und den die Strukturen tragenden Teller 4 nur als aufschiebbaren Ring auszubilden.

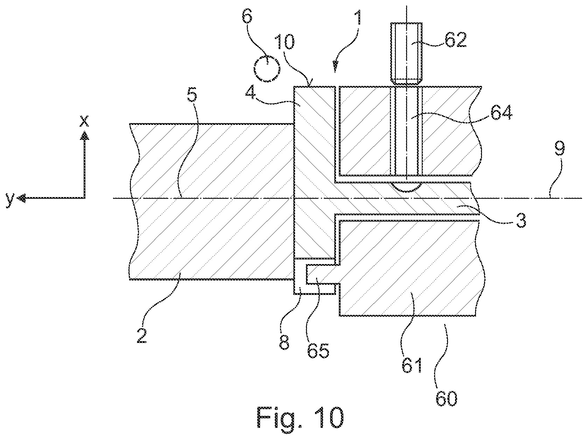

In **Fig. 10** ist der in einer Werkstückaufnahme 60 einer Bearbeitungsmaschine befestigte Rohling im Schnitt dargestellt. Der Halter 1 ist mit seinem Schaft 3 in einem Futter 61 der Werkstückaufnahme 60 mittels einer Madenschraube 62, die in ein entsprechendes Gewindeloch 64 in dem Futter 61 eindrehbar und gegen den Schaft 3 verspannbar ist, befestigt. Im Idealfall fällt die Längsachse 5 des Halters 1 mit der Drehachse 9 der Werkstückaufnahme 60 zusammen.

Der Halter 1 umgreift stückweise über die Ausnehmung 8 in dem sich an den Schaft 3 anschließenden Teller 4 einen am Futter 61 befindlichen Vorsprung 65 und wird so in seiner Winkellage um die Drehachse 9 am Futter ausgerichtet. Eine Zuordnung der Winkellage zwischen Teller 4 und dem Futter 61 kann, entsprechend dem Stand der Technik, auch an einer anderen Stelle zwischen Teller 4 und Futter 61 mittels eindeutiger geometrischer Übereinstimmung erfolgen. Die Winkellage des Futters 61 der Werkstückaufnahme 60 bezüglich der Drehachse 9 ist der Bearbeitungsmaschine bekannt und es gibt daher eine eindeutige Startposition.

An dem Teller 4 ist der nur teilweise dargestellte Rohlingskörper 2 angebracht, der sich entlang der Drehachse 9 in y-Richtung erstreckt. Hinter der Schnittebene ist ein Werkzeug 6 angedeutet, mit dem verschiedene Touchiervorgänge an den Halter, genauer an die am Teller 4 angeordnete Umfangsfläche 10, oder an den Rohlingskörper 2 möglich sind.

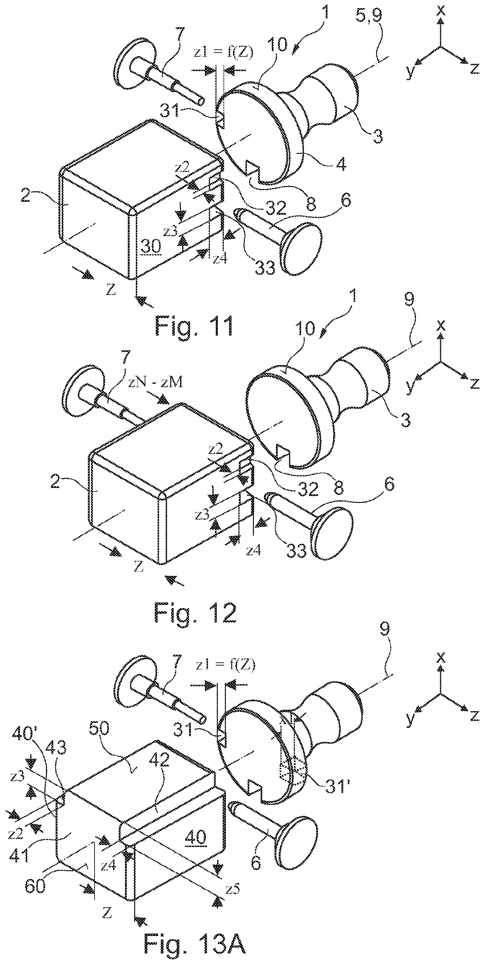

Aus den Fig. 11-16 wird deutlich, dass die Strukturen auch am Rohlingskörper selbst angebracht sein können. Dies wird nachfolgend erläutert.

Auf Grund der großen Anzahl verschiedener Rohlingskörper mit unterschiedlichen Abmessungen und Materialeigenschaften kann es sinnvoll sein, Strukturen mit Informationen über den Rohlingskörper auch oder ausschließlich auf diesem selbst zu hinterlegen. Die Aufteilung der Informationen auf den Halter bzw. auf den Rohlingskörper ist beliebig möglich. Einer an einer bestimmten Position vorhandenen Struktur kann beispielsweise eine Eigenschaft wie die Breite oder die Höhe des Rohlingskörpers zugeordnet sein.

Auch bei am Rohlingskörper angebrachten Strukturen ist es von zentraler Bedeutung, dass zumindest die ungefähren Positionen der die Information tragenden Strukturen der Maschine bekannt sind. Ausgehend von einer bestimmten definierten Position als Ausgangsposition sollen diese Informationen möglichst schnell gewonnen werden können, um den gesamten Herstellungsvorgang zu beschleunigen. Dazu ist es auch wesentlich, dass die Winkellage des die Strukturen tragenden Halters und/oder des Rohlingskörpers bezüglich der Werkstückaufnahme bekannt ist oder zumindest feststellbar ist.

In **Fig. 11** befinden sich die Strukturen 31 -33 mit den Informationen zum Teil am Halter 1, zum Teil auf einer als Referenzfläche ausgebildeten Seitenfläche 30 des Rohlingskörpers 2. Die erste Ausgangsposition für die Überprüfung des Rohlings auf Strukturen mit Informationen ist der bekannte Umfang des Halters 1 an der Umfangsfläche 10, der eine Genauigkeit im Toleranzbereich von 10 $\mu$m aufweist.

Zur Festlegung der zweiten Ausgangsposition prüft die Maschine durch vorsichtiges Anfahren des Werkzeugs 7 an die Umfangsfläche 10 des Halters 1 des Rohlings, ob an einer oder mehreren vorbekannten Positionen des Halters 1 Strukturen mit Informationen über den Rohlingskörper 2 hinterlegt sind. Dieser Vorgang des vorsichtigen Anfahrens wird als Touchieren oder Touchiervorgang bezeichnet.

Im dargestellten Fall ist an der Umfangsfläche 10 des Halters 1 nur in einer einzigen Position eine Struktur in Form einer Ausnehmung 31 vorgesehen. Aus der Tiefe der Ausnehmung 31 gegenüber der Umfangsfläche 10 des Halters wird ein Wert $z1$ gewonnen, der in diesem Fall eine Information über die Lage einer möglicherweise weitere Informationen tragenden Referenzfläche 30 beinhaltet. Diese Information kann die Ausdehnung des Rohlingskörpers in einer bestimmten Richtung sein, die beispielsweise den Abstand Z der Referenzfläche 30 bezüglich der Drehachse 9 des in der Werkstückaufnahme befestigten Halters 1 als analoge Information bedeutet.

Der Rohlingskörper ist innerhalb vorgegebener Toleranzen zu der Längsachse 5 des Halters genau auf dem Halter befestigt. Darüber hinaus ist die Toleranz der Abweichung der Drehachse 9 der Werkstückaufnahme und der Längsachse 5 des Halters bekannt. Diese Toleranzen werden bei der Vorpositionierung des Werkzeugs an der Referenzfläche 30 berücksichtigt.

Die Genauigkeit der analogen Information in der Struktur 31 liegt im Bereich von 10 $\mu$m, wobei ein Faktor angewendet werden kann, um die tatsächlichen Abmessungen in mm zu erhalten. So kann einem durch Touchieren festgestellten Wert von 1,2 mm eine Abmessung von 12 mm entsprechen, wenn der in der Maschine hinterlegte Faktor 10 beträgt.

Anhand dieser Information wird das Werkzeug 6, dessen Lage zum Halter 1 bekannt ist, für einen weiteren Touchiervorgang zunächst an der entsprechenden Seitenfläche als Referenzfläche 30 des Rohlingskörpers 2 vorpositioniert und anschließend wird durch Touchieren die genaue Lage dieser Seitenfläche als Referenzfläche 30 des Rohlingskörpers in z-Richtung ermittelt.

Nach der Feststellung dieser genau ermittelten z-Position der Seitenfläche als Referenzfläche 30 kann die zweite Ausgangsposition, für die Abfrage weiterer in dieser Seitenfläche angeordneter, bestimmte Informationen tragender Strukturen 32, 33, an diese Stelle gelegt werden.

Die Struktur 32, 33 kann in ihrer x,y-Ausdehnung mindestens so groß gewählt sein, dass das Werkzeug auch bei nicht mittig befestigtem Rohlingskörpers 2, der eine im Vergleich zur Herstellungsgenauigkeit grobe maximale Toleranz in x-Richtung aufweist, sicher in die Struktur 32, 33 eintauchen kann. Die y-Position des Halters selbst ist auch innerhalb eines Toleranzbereichs in der Größenordnung der Herstellungsgenauigkeit bekannt. Bei einer Befestigung des Rohlingsköpers 2 an dem Halter mittels einer Klebeschicht tritt unter Berücksichtigung des Klebespalts zwischen Rohlingskörper 2 und Halter in y-Richtung eine maximale Abweichung auf, die ebenfalls innerhalb einer groben Toleranz liegen kann.

Bei einem Durchmesser eines Bearbeitungswerkzeugs von 1,6 mm wird man geeigneterweise für die Struktur 32, 33 eine x,y-Ausdehnung von größer 2,0 mm x 2,0 mm wählen um sicherzustellen, dass das Werkzeug zuverlässig die Strukturen erfassen kann. Die Strukturen sollen dazu also in ihrer Ausdehnung in x,y-Richtung mindestens das 1,1-fache des Durchmessers des größten Bearbeitungswerkzeugs aufweisen, das für die Abtastung verwendet wird.

Die Lage der auf dem Rohlingskörper 2 an der Seitenfläche 30 angebrachten Strukturen 32, 33 in Form von sich in x-Richtung und in y-Richtung, also von oben nach unten und von links nach rechts in der Zeichenebene, erstreckenden Ausnehmungen sind der Maschine bekannt. Zur Feststellung der Tiefe in Z-Richtung kann die Seitenfläche 30 dabei als Referenzfläche herangezogen werden.

Die lichte Weite einer Ausnehmung ist dabei mindestens so groß, dass das Werkzeug 6,7 innerhalb der die Ausnehmung begrenzenden Seitenwände Platz findet. Diese Ausnehmungen der weiteren Strukturen 32, 33 tragen Informationen für Werte z2 - z4, die z.B. die Abmessungen des Rohlingskörpers in x- und y-Richtung sowie eine Kontrollinformation wiedergeben. Dazu kann eine Ausnehmung ein Maß z3 in x-Richtung oder ein Maß z4 in y-Richtung aufweisen, das mit einem Touchiervorgang erfassbar ist.

Die Informationen der Werte z2 - z4 können auch auf die Lage weiterer, hier nicht eingezeichneter Strukturen mit Werten (zN - zM) für weitere Informationen verweisen.

Die Vorpositionierung des Werkzeugs für die weiteren Touchiervorgänge im Bereich dieser Strukturen 32, 33 erfolgt auf Grund der Kenntnis der vorgegebenen mittleren Lagen dieser Strukturen und der zuvor ermittelten Lage des Rohlingskörpers bzw. der die Strukturen tragenden Seitenfläche 30 in z-Richtung.

Durch Touchieren z.B. der Ausnehmung der unteren Struktur 33 in x-Richtung, also nach oben und unten an die Seitenwände der Ausnehmung, kann der Wert z3 gewonnen werden, wobei der Werkzeugdurchmesser ebenfalls als bekannt vorausgesetzt wird. Der Wert z3 gibt dann z.B. die Ausdehnung des Rohlingskörpers in x-Richtung an.

Durch Touchieren z.B. der Ausnehmung der unteren Struktur 33 in y-Richtung, also von links nach rechts an die Seitenwände der Ausnehmung, hier einseitig begrenzt durch die Oberfläche des Halters 1, kann der Wert z4 gewonnen werden, wobei wiederum der Werkzeugdurchmesser bekannt ist. Der Wert z4 gibt dann z.B. die Ausdehnung des Rohlingskörpers in y-Richtung an.

Durch Touchieren z.B. der Ausnehmung der oberen Struktur 32 in z-Richtung kann der Wert z2 gewonnen werden, wobei die Lage der Seitenfläche 30 des Rohlingskörpers bekannt ist und z2 die Differenz des Grundes der Ausnehmung zur Seitenfläche 30, also die Tiefe der Ausdehnung darstellt. Der Wert z2 ist dann z.B. die Kontrollinformation über die Werte z1, z3 und z4.

In **Fig. 12** befinden sich alle Strukturen 32, 33 mit Informationen nur auf dem Rohlingskörper 2. Die erste Ausgangsposition ist wieder die bekannte Umfangsfläche 10 des in der Bearbeitungsmaschine eingespannten und mittels der Ausnehmung 8 bezüglich der Winkellage zur Drehachse 9 der Bearbeitungsmaschine positionierten Halters 1. Die Maschine findet bei dem mindestens einen Touchiervorgang des Werkzeugs 7 an die Umfangsfläche des Halters an keiner der mindestens einen vorbekannten Position an der Umfangsfläche 10 des Halters eine Struktur mit einer Information. In diesem Fall wird das Werkzeug 6, 7 entsprechend einem vorgegebenen Maß des Rohlingskörpers in z-Richtung, z.B. dem größtmöglichen aus einer Mehrzahl unterschiedlich großer Rohlingskörper, am Rohlingskörper 2 vorpositioniert und die genaue Lage des Rohlingskörpers bzw. seiner Seitenfläche 30 in z-Richtung wird durch einen Touchiervorgang an der Seitenfläche 30 ermittelt.

Dies ist z.B. dann von Vorteil, wenn eine große Anzahl in der Größe verschiedener Rohlingskörper in z-Richtung das gleiche, insbesondere das größtmögliche Maß besitzen. In diesem Fall kann auf eine dieses Maß betreffende Ausnehmung im Halter sogar ganz verzichtet werden, was zu einer Reduzierung der Halterkosten und -vielfalt und zu einer Verkürzung der Anfahrzeiten an den Rohling führt, da dieser Touchiervorgang entfällt.

Die Ausgangsposition ist ab hier die ermittelte z-Position der die Strukturen 32, 33 tragenden Referenzfläche 30 des Rohlingskörpers und die Bestimmung der weiteren Werte z2 - z4 mit weiteren Touchiervorgängen an die Strukturen 32, 33 in der Referenzfläche 30 erfolgt wie vorstehend beschrieben.

Die Strukturen in Fig. 11, 12 können durch eine zusätzliche Bearbeitung oder, wie z.B bei einem Press- oder Giessverfahren durch die Werkzeuggeometrie selbst, ohne zusätzliche Bearbeitung hergestellt werden.

Für einen in **Fig. 13A** dargestellten Rohlingskörper 41, der im Strangpressverfahren hergestellt wurde, ist eine Gestaltung der Strukturen durch über die gesamte Länge des Rohlingskörpers ausgeführte Ausnehmungen am Rohlingskörper ohne zusätzliche Bearbeitung möglich.

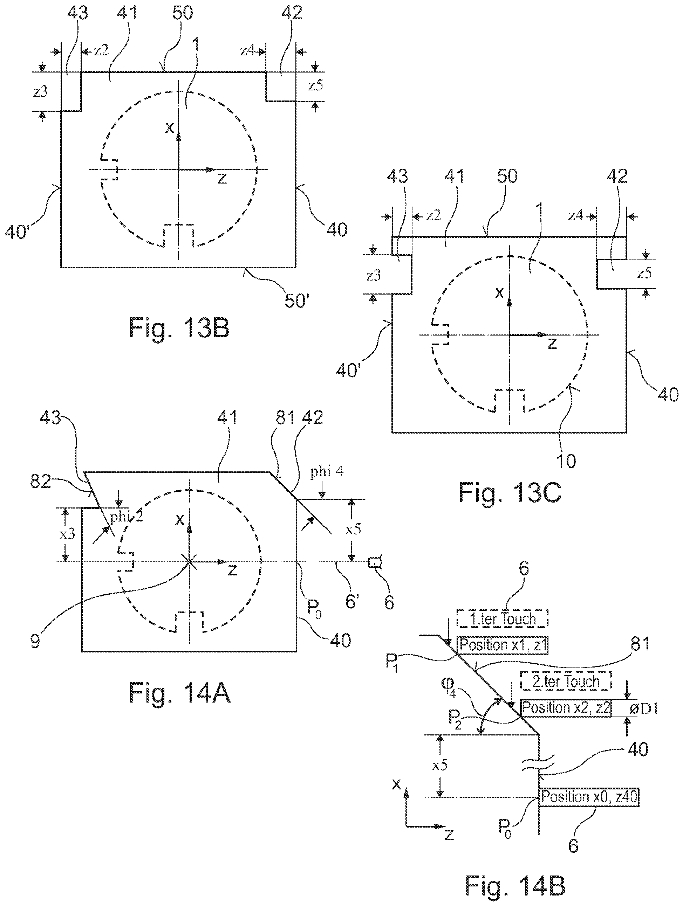

Die die Werte z2 - z5 aufweisenden Strukturen 42, 43 können dabei gemäß **Fig. 13A, 13B** als Ausnehmung an den Kanten aber auch gemäß **Fig. 13C** als Nut in der Seitenfläche 40,40' des Rohlingskörpers 41 ausgeführt sein. Die Fig. 13B, 13C sind zur besseren Übersichtlichkeit als Draufsichten entgegen der y-Richtung auf den Rohlingskörper 41 dargestellt.

Die erste Ausgangsposition ist wieder die bekannte Umfangsfläche 10 des Halters. Die Information über den Wert z1 wird aus der Tiefe der Struktur 31 in Form einer Ausnehmung bezüglich der Umfangsfläche des Halter gewonnen und repräsentiert Lage der Seitenfläche 40 des Rohlingskörpers 41 in Bezug zur Drehachse 9 der Werkzeugaufnahme. Diese Information wird zur optimierten Vorpositionierung z.B. des in der Zeichnung linken Werkzeugs 7 für den Touchiervorgang an der verdeckten Seitenfläche 40' des Rohlingskörpers 41 benutzt, um die genaue Lage dieser Seitenfläche 40' zu bestimmen, die als Referenzfläche benutzt wird, um beispielsweise den Wert z2 aus der Struktur 43 zu bestimmen.

Zur Vorpositionierung des Werkzeugs 7 an der Struktur 43 in x-Richtung zur Feststellung des Wertes z3 kann noch eine zweite Struktur 31' an der Umfangsfläche des Halters, etwa gegenüberliegend zu der Ausnehmung der Struktur 31 angebracht sein. Während das eine, hier linke Werkzeug 7 den Wert z1 der Ausnehmung 31 bestimmt, kann das andere, hier rechte Werkzeug 6 gleichzeitig den Wert x1 der Ausnehmung 31' bestimmen.

Zur Feststellung des Wertes z3 wird dann das Werkzeug 7 zunächst zur Bestimmung der genauen Lage der Seitenfläche 50 in x-Richtung von der Vorpositionierung ausgehend auf diese Seitenfläche 50 angefahren. Nach Feststellung der genauen Lage der Seitenfläche 50 wird die Struktur 43 in x-Richtung angefahren. Aus der Differenz der Lage der Referenzfläche 50 und der Lage der Struktur in x-Richtung, also einer in der x-z-Ebene liegenden Fläche des Absatzes der Struktur 43 wird dann der Wert z3 bestimmt. Entsprechendes gilt für den Wert z5, wobei hier das Werkzeug 6 beim Touchiervorgang zum Einsatz kommt.

Die Bestimmung der weiteren Werte z4, z5 erfolgt wie vorstehend beschrieben.

Die Strukturen können auch als schrägliegende Fläche, etwa als Fase gestaltet sein, wobei die Lage der schrägliegenden Fläche am Rohlingskörper 41 eine erste Information und der Winkel der schrägliegende Fläche eine zweite Information darstellen. Dies wird in den Fig. 14A-16B dargestellt.

Eine in Fig. 14A dargestellte Position P0 mit den x-z-Koordinaten x0 und z40 ergibt sich beim Touchieren der Fläche 40 mit dem Werkzeug 6 entlang der durch die Drehachse 9 der Werkstückaufnahme verlaufenden Werkzeugachse 6', die demnach auch entlang der Z-Achse verläuft.

Die in Fig. 14A in einem Abstand x5 zu der z-Achse liegende Struktur 42 ist in Form einer Fase an der Rohlingskörperkante ausgebildet, schneidet aus dem Rohlingskörper 41 also ein Stück ab. Die Struktur 43 in einem Abstand x3 schneidet hingegen aus dem Rohlingskörper 41 ein Stück heraus. Beiden gemeinsam ist eine entlang der y-Richtung in einem Winkel phi4 bzw. phi2 zur z-Achse verlaufende schräge Fläche.

In Fig. 14B wird dargestellt, wie die Lage und der Winkel der schrägen Fläche 81 der Struktur 42 bestimmt wird.

Ausgehend von der Position P0 mit den Werten x0, z40 kann mit einem ersten Touchiervorgang des Werkzeugs 6 an die schräge Fläche 81 entgegen der x-Richtung an einer ersten Position P1 mit einem vorgegebenen Wert z1 ein Wert x1 in x-Richtung bestimmt werden. Mit einem zweiten Touchiervorgang an einer zweiten Position P2 mit einem vorgegebenen Wert z2 kann ein Wert x2 in x-Richtung bestimmt werden. Die z-Werte z1 und z2 der Positionen P1, P2 sind also bezogen auf den z-Wert der Position P0 z40 fest vorgegeben, z.B. z1 = z40 + 3mm und z2 = z40 + 1mm. Die Positionen x1 und x2 ergeben sich beim Touchieren der Phase in x-Richtung.

Alternativ können die Positionen P1, P2 durch die Werte x1 und x2, bezogen auf x0, fest vorgegeben sein. Die Werte z1 und z2 ergeben sich dann beim Touchieren der Fläche 81 mit dem Werkzeug 6 in z-Richtung.

Der Winkel phi4 berechnet sich folgendermaßen:

$$\text{phi4} = \text{arctan } [(x1 - x2) / (z2 - z1)]$$

Der Wert x5 berechnet sich in Kenntnis des Werkzeugdurchmessers D1 folgendermaßen:

$$x5 = (x2 - \tfrac{1}{2}*D1) - [(z40 - z2) * \tan(\text{phi4})] + x0$$

Die Bestimmung der Werte phi2 und x3 aus Fig. 14A ergeben sich auf dieselbe Art.

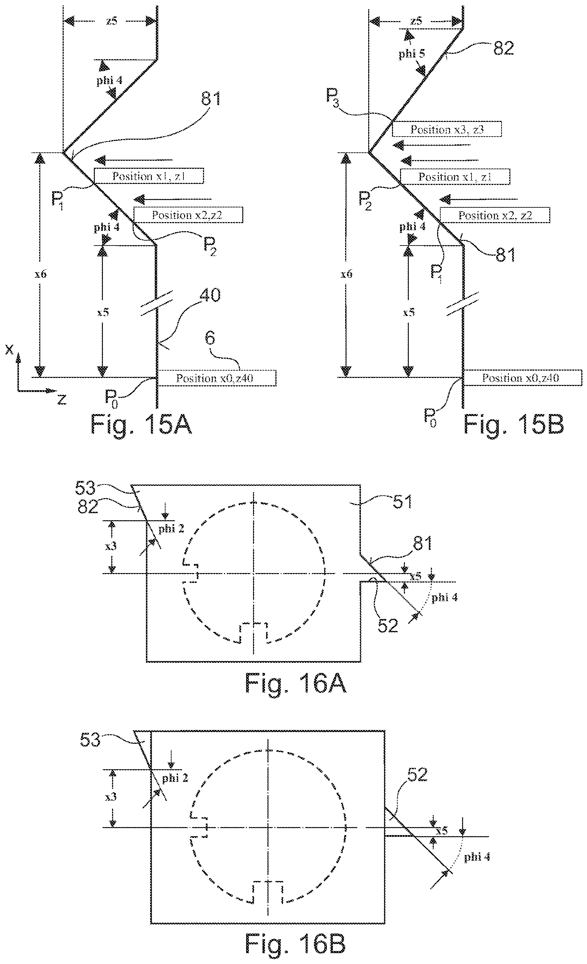

Fertigungstechnisch kann es von Vorteil sein, eine Struktur wie die Struktur 43 aus Fig. 14A als Doppelfase mit zwei aufeinander zulaufenden schrägen Flächen auszuführen, wie in den Fig. 15A,B dargestellt ist. Der Vorteil liegt einerseits in einem bei einem Rohlingskörper aus Keramik vorteilhaften stumpferen Winkel und andererseits in einer besseren Ausformbarkeit bei Pressteilen.

Bei einem bekannten Wert x6 als Maß für die Lage der Doppelfase im Rohlingskörper 41, das dem größten Abstand zur Oberfläche 40 entspricht und der Vorpositionierung für den Touch in Abhängigkeit von x6 an den Positionen P1 bis P3 mit den Werten x1, x2, x3 lassen sich Werte z1, z2 und z3 ermitteln. In Kenntnis des Werkzeugdurchmessers D1 berechnen sich die Informationen über x5 und phi4 folgendermaßen:

$$\text{phi4 = arctan [(x1 - x2) / (z2 - z1)]}$$

$$\text{x5 = (x2 - ½*D1) - [(z40 - z2) * tan(phi4)] + x0}$$

Bei einer Struktur, die eine asymmetrisch geformte Doppelfase mit zwei um einen voneinander verschiedenen Winkeln phi4, phi5 gegenüber der z-Achse geneigten schrägen Flächen 81,82 aufweist, kann eine weitere in Form eines Winkels phi5 hinterlegte Information in einem weiteren Touchiervorgang an der Position P3 ermittelt werden. In Kenntnis des Werkzeugdurchmessers D1 berechnen sich die Informationen über x5 und phi4 und phi5 folgendermaßen

$$\text{phi4 = arctan [(x1 - x2) / (z2 - z1)]}$$

$$\text{x5 = (x2 - ½*D1) - [(z40 - z2) * tan(phi4)] + x0}$$

$$\text{phi5 = arctan[((x3+½*D1)-x6)/((x6-x5)/tan(phi4)]-(z40-z3))]}$$

Wie in Fig. **16A** dargestellt kann auch eine im Vergleich zu einem Rohlingskörper ohne Informationen über den Rohlingskörper 51 herausstehende Struktur 52,53 vorgesehen sein. Die Bestimmung der Werte für x3, x5 und phi2, phi4 erfolgt analog Fig. 13b durch Anfahren der schrägen Flächen 81,82. In Fig. 16B ist gezeigt, dass sich die Strukturen 52,53 nicht über die gesamte Länge erstrecken müssen.

Auch diese Strukturen können als symmetrische oder asymmetrische Doppelfasen ausgeführt sein.

Die Touchierpositionen in y-Richtung können bei der Ausbildung der Strukturen als Nuten bzw. als schräge Flächen prozessabhängig variieren, d.h. zur Optimierung von Verfahrwegen kann der Touchiervorgang in verschieden Abständen vom Halter erfolgen. Nach einem Werkzeugbruch und erneutem Touchieren kann hier z.B. die unbearbeitete Restlänge des Rohlingskörpers für die Vorpositionierung in y-Richtung berücksichtigt werden.

Aus Fertigungsgründen und keramikgerechter Ausführung eines Rohlingskörpers kann es vorteilhaft sein, alle Kanten nach dem Stand der Technik mit einer Fase oder Rundung zu versehen.

Grundsätzlich gilt aber, dass diese Strukturen weder beim Strangpressen, noch beim Pressen in eine Form noch bei einer zusätzlichen Bearbeitung sich über die gesamte Länge erstrecken müssen. Grundsätzlich können sich die Strukturen sowohl durchgängig als auch abschnittsweise auf einer der vier Seitenflächen 40,40',50, 50' oder einer der zwei Stirnflächen 60, also der nicht mit einer Referenznummer kanzleibezeichneten Stirnfläche am Halter und der freien Stirnfläche 60 des Rohlingskörpers befinden.

Die Ausführung der Ausnehmung über die gesamte Länge des Rohlingskörpers ist auch bei in einer Form gepressten Rohlingskörpern möglich. Für die Herstellung wird die Pressform durch Materialauftrag im Innenvolumen der Pressform so gestaltet, dass in bestimmten Bereichen die Keramik nicht das volle Volumen eines Quaders füllt. Die Pressform kann durch Materialabtrag im Innenvolumen der Pressform auch so gestaltet sein, dass in bestimmten Bereichen die Keramik über das Volumen eines Quaders herausragt.

Eine nur kleinflächige Ausnehmung, wie in Fig. 11, 12 dargestellt, kann bei bestimmten Materialien zu Inhomogenitäten und internen Spannungen führen. Eine gleichmäßig über den Rohlingskörper verteilte Struktur wie in Fig. 13, 14 dargestellt kann diesen Effekt reduzieren.

Für alle Ausführungsformen gilt, dass Strukturen besonders geeignet sind, bei denen die Informationen aus der Tiefe von Ausnehmungen, bezogen auf die ermittelte Position einer Referenzfläche, bestimmt werden, bei denen also die Tiefe der Ausnehmung festgestellt wird. Gegenüber Vorsprüngen hat dies den Vorteil, dass eine Vorpositionierung auf dem Niveau der Referenzfläche erfolgen kann.

Anstelle der Ausnehmungen mit ausgewerteten Abmessungen wie in Fig.11 mit z2,z3,z4 beschrieben, die also in der Tiefe z2 und einer Ausdehnung z3 oder z4 erfasst werden, können entsprechende Gestaltungen, beispielsweise eine entsprechend große zylindrische Ausnehmung mit gleicher Tiefe z2 und mit einem Durchmesser z3 oder z4 als Ausnehmung im Sinne der Erfindung verwendet werden.

Insbesondere dann, wenn die Information einer Struktur nur in z-Richtung hinterlegt ist, ist die Form dieser Struktur in x- und y-Richtung beliebig, solange das Werkzeug die Tiefeninformation in z-Richtung ungehindert abtasten kann.

Es sind alle Kombinationen der Anbringung von Strukturen mit Informationen am Halter und der Anbringungen von Strukturen mit Informationen am Rohlingskörper jeweils an der Maschine bekannten Positionen möglich.

Vier Informationen können dann z.B. wie folgt verteilt sein:

- eine Ausnehmung mit definierter Tiefe am Halter und drei Ausnehmungen mit definierter Tiefe am Rohlingskörper, oder

- vier Ausnehmungen mit definierter Tiefe am Rohlingskörper.

Für das Verständnis der Vorteile der Erfindung wesentlich ist, dass im Stand der Technik außer den Touchiervorgängen am Halter 1 des Rohlings auch ein Touchiervorgang am Rohlingskörper 2 selbst erforderlich sein kann, um die Abmessungen des Rohlingskörpers zu bestimmen. Der Touchiervorgang am Rohlingskörper 2 selbst ist nun aufgrund der optimierten Vorpositionierung des Bearbeitungswerkzeugs zur Ausführung des Touchiervorgangs in kürzerer Zeit durchführbar.

Ein weiterer bedeutender Vorteil aus der Kenntnis der Abmessungen des Rohlingskörpers 2 besteht darin, dass aufgrund der festgestellten Abmessungen die Wege des Werkzeugs bei der Bearbeitung des Rohlingskörpers an diese Abmessung angepasst werden können. Wenn beispielsweise das durch Materialabtrag herzustellende Formteil so im Rohlingskörper 2 angeordnet ist, dass das Werkzeug aufgrund des Erreichens des maximalen Verstellwegs nicht die gesamte ihm zugedachte Form herstellen kann, kann eine vollständige Bearbeitung erfolgen, wenn der Rohlingskörper 2 für die endgültige Bearbeitung um 90° gedreht wird. Dieser Bearbeitungsschritt wird als Korrekturvorgang bezeichnet. Damit kein unbearbeitetes Restmaterial des Rohlingskörpers 2 den Zugang zu dem bereits teilweise bearbeiteten Formteil versperrt, wird bereits in dem ersten Bearbeitungsschritt nicht nur das Material um das Formteil herum abgetragen, sondern der Rohlingskörper 2 wird vom Formteil ausgehend bis zu seinem Rand abgetragen.

Da bislang die Lage des Rands des Rohlingskörpers 2 in dieser Bearbeitungsrichtung unbekannt war, wurde stets von der maximalen Abmessung ausgegangen und der Weg des Werkzeugs wurde bis zu dieser maximalen Abmessung des Rohlingskörpers bestimmt. Aufgrund der Kenntnis der Abmessung des Rohlings auch in dieser Richtung kann der Weg nun auf die tatsächliche Abmessung verkürzt werden, was zu einer Einsparung der Bearbeitungszeit von bis zu 10 % führen kann.

Durch die begrenzte Größe des Bearbeitungsraums der Werkzeuge ist auch die Größe des bearbeitbaren Rohlings begrenzt.

Die Kontrollinformation oder eine Struktur kann nach dem erfolgreichen Touchieren oder nach dem Bearbeiten des Rohlingskörpers 2 durch eine Bearbeitung mit dem Werkzeug für die Bearbeitung des Rohlingskörpers verändert bzw. eine zusätzliche Information eingebracht werden, um eine unsachgemäße Wiederverwendung des Halters 1 zu verhindern bzw. Informationen über z.B. den bisherigen Abtrag eines teilbearbeiteten Rohlingskörper 2 zu hinterlegen.

Beim Touchiervorgang kann entweder die Drehzahl des Werkzeugs oder die Kraft auf das Bearbeitungswerkzeug oder beides ausgewertet werden.

Anstelle einer Auswertung der Struktur mit einem Touchiervorgang eines Werkzeugs kann auch eine Vermessung der Struktur mit optischen Mitteln erfolgen, die in der Bearbeitungsmaschine vorgesehen sind und die den in die Bearbeitungsmaschine eingebrachten Rohling vor der Bearbeitung im Bereich der Struktur vermessen. In der DE 199 50 780 A1 ist eine dafür geeignete Bearbeitungsmaschine mit einer Vermessungseinrichtung offenbart. Insbesondere bei einem Punktsensor muss auch der Sensor zugestellt werden, so dass Stellwege erforderlich sind.

Die nur für einzelne Ausführungsbeispiele genannten Merkmale und Vorgehensweise lassen sich in der Regel auch auf die anderen Ausführungsbeispiele übertragen.

**Patentansprüche**

1. Rohling zur Herstellung zahntechnischer Formteile, wobei der Rohling einen Rohlingskörper (2) aus Zahnrestaurationsmaterial aufweist, aus welchem mittels eines Werkzeugs (6, 7) das herzustellende Formteil durch Materialabtrag herausarbeitbar ist, wobei der Rohling eine Codierung bestehend aus mindestens einer geometrischen Struktur (11-14; 17 - 19; 31 - 33; 42 - 43; 52 - 53) als Informationsträger für Eigenschaften des Rohlingskörpers (2) aufweist, wobei die Struktur so im Rohling angeordnet ist, dass die Abmessung durch Abtasten oder Vermessen des Rohlings feststellbar ist, **dadurch gekennzeichnet, dass** die Abmessung der Struktur (11-14; 17-19; 31 - 33; 42 - 43; 52 - 53) so ausgebildet ist, dass der bei deren Feststellung gewonnene Wert einer analogen Information über eine Eigenschaft des Rohlingskörpers (2) entspricht, indem die Abmessung der geometrischen Struktur einer vorgegebenen mathematischen Funktion folgend mindestens einer Abmessung des Rohlingskörpers (2) entspricht und der Wert eine analoge, maßstäbliche Abbildung der zugeordneten maximalen Abmessung des Rohlingskörpers ist.

2. Rohling nach Anspruch 1, **dadurch gekennzeichnet, dass** eine weitere Struktur (11-14; 17-19; 31 - 33; 42 - 43;

52 - 53) entsprechend einer Kontrollinformation über eine Funktion aus mindestens zwei Abmessungen von mindestens zwei Strukturen (11-14; 17-19; 31 - 33; 42 - 43; 52 - 53) ausgebildet ist.

3. Rohling nach einem der Ansprüche 1 bis 2, **dadurch gekennzeichnet, dass** die Struktur (11-14; 17-19; 31 - 33; 42 - 43; 52 - 53) mindestens eine Fläche (11'-14'; 81, 82) aufweist, wobei die Abweichung der Lage, der Abmessung oder der Art der Fläche (11'-14'; 81, 82) von einer vorgegebenen Referenzfläche (10, 15, 16, 30, 40, 40', 50) einer analogen Information über den Rohlingskörper (2) entspricht.

4. Rohling nach einem der Ansprüche 1 bis 3, **dadurch gekennzeichnet, dass** der Rohling einen Halter (1) für den Rohlingskörper (2) aufweist und dass die Struktur auf diesem Halter (1) angeordnet ist.

5. Rohling nach einen der Ansprüche 1 bis 4 **dadurch gekennzeichnet, dass** zumindest ein Teil der Strukturen (31 - 33; 42 - 43; 52, 53) am Rohlingskörper (41) angeordnet sind.

6. Rohling nach einen der Ansprüche 1 bis 5, **dadurch gekennzeichnet, dass** der Rohling einen Halter und einen Rohlingskörper (41) umfasst und dass auf dem Halter eine Struktur (31) vorgesehen ist, in der die Lage zumindest einer weiterer, am Rohlingskörper (41) angeordneten Struktur (32, 33, 42, 43, 52, 53) enthalten ist.

7. Rohling nach einem der Ansprüche 1 bis 6, **dadurch gekennzeichnet, dass** die Struktur (32, 33, 42, 43, 52, 53) in einer gegenüber einer Referenzflache unterschiedlichen Höhe, Breite oder Länge oder Winkellage ausgeführt ist.

8. Verfahren zur Herstellung eines zahntechnischen Formteils aus einem Rohling mit einem Rohlingskörper (2; 41) aus Zahnrestaurationsmaterial mittels eines Werkzeugs (6, 7) durch Materialabtrag, wobei zur Feststellung der Lage des in eine Bearbeitungsmaschine eingebrachten Rohlingskörpers (2) ein Touchiervorgang des Werkzeugs (6, 7) am Rohling vorgesehen ist, **gekennzeichnet durch**:

   - Feststellung mindestens einer relevanten Größe des Rohlingskörpers (2), wobei zur Feststellung der Größe eine am Rohling vorgesehene Codierung mit mindestens einer geometrischen Struktur, deren Abmessung entsprechend einer Funktion analog mindestens eine maximalen Abmessung des Rohlingskörpers (2; 41) wiedergibt, erfasst wird, wobei der erfasste Wert unter Verwendung einer vom touchierten Rohling unabhängigen analogen, maßstäblichen Abbildung in eine Längenangabe umgewandelt wird;
   - Vorpositionierung des Bearbeitungswerkzeugs für den Touchiervorgang in Abhängigkeit der festgestellten Größe des Rohlingskörpers (2; 41).

9. Verfahren nach Anspruch 8, **dadurch gekennzeichnet, dass** eine Begrenzung des Touchierweges in Abhängigkeit der festgestellten Größe des Rohlingskörpers (2; 41) vorgesehen ist.

10. Verfahren nach Anspruch 8 oder 9, **dadurch gekennzeichnet, dass** nach erfolgreichem Touchiervorgang und /oder nach dem Bearbeiten des Rohlingskörpers (2; 41) eine Änderung der Struktur (11-14; 17-19; 31-33; 42-43; 52-53) und/oder eine Herstellung einer weiteren Struktur als Teil der Codierung durch das Werkzeug erfolgt.

11. Verfahren zur Herstellung eines zahntechnischen Formteils aus einem Rohling mit einem Rohlingskörper (2; 41) aus Zahnrestaurationsmaterial mittels eines Werkzeugs (6, 7) durch Materialabtrag, wobei zur Feststellung der Lage des in eine Bearbeitungsmaschine eingebrachten Rohlingskörpers (2; 41) ein Touchiervorgang des Werkzeugs (6, 7) am Rohling vorgesehen ist, **gekennzeichnet durch**:

   - die Feststellung mindestens einer relevanten Größe des Rohlingskörpers (2), wobei zur Feststellung der Größe eine am Rohling vorgesehene Codierung mit mindestens einer geometrischen Struktur, deren Abmessung entsprechend einer Funktion analog mindestens eine maximalen Abmessung des Rohlingskörpers (2; 41) wiedergibt, erfasst wird, wobei der erfasste Wert unter Verwendung einer vom touchierten Rohling unabhängigen analogen, maßstäblichen Abbildung in eine Längenangabe umgewandelt wird;
   - die Festlegung der während der Bearbeitung vorgegebenen Wege der Werkzeuge in Abhängigkeit der festgestellten Größe des Rohlingskörpers (2; 41).

12. Verfahren nach einem der Ansprüche 8 bis 11, **dadurch gekennzeichnet, dass** eine weitere Struktur (14, 32) erfasst wird, die eine Kontrollinformation über die Konsistenz von mindestens zwei weiteren Strukturen (11-13; 17-19; 33; 42-43; 52--53) darstellt.

**13.** Verfahren nach Anspruch 12, **dadurch gekennzeichnet, dass** bei falscher Kontrollinformation ein Abbruch der Bearbeitung erfolgt.

**14.** Verfahren nach einem der Ansprüche 8 bis 13, **dadurch gekennzeichnet, dass** die Feststellung mindestens einer relevanten Größe des Rohlingskörpers (2; 41) durch Ausführen eines Touchiervorgangs an einer am Rohlingskörper (2; 41) angeordneten, eine analoge Information enthaltenden Struktur (32, 33; 42,43; 52, 53) erfolgt.

**15.** Verfahren nach einem der Ansprüche 8 bis 14, **dadurch gekennzeichnet, dass** die Lage der am Rohlingskörper (2; 41) angeordneten Struktur (33, 42, 43, 52, 53) durch Erfassen einer am Rohlingskörper (2; 41) angeordneten Struktur (32) bestimmt wird.

**Claims**

**1.** Blank for producing dental formed parts, wherein the blank has a blank body (2) made of tooth restoration material, from which the formed part to be produced can be carved out by removing material by means of a tool (6, 7), wherein the blank has a coding consisting of at least one geometrical structure (11-14; 17 - 19; 31 - 33; 42 - 43; 52 - 53) as information carrier for properties of the blank body (2), wherein the structure is arranged in the blank such that the dimensions can be determined by scanning or measuring the blank, **characterized in that** the dimensions of the structure (11-14; 17-19; 31 - 33; 42 - 43; 52 - 53) are designed such that the value obtained in their determination corresponds to an analog unit of information about a property of the blank body (2), **in that** the dimensions of the geometrical structure, following a given mathematical function, correspond to at least one dimension of the blank body (2), and the value is an analog, true-to-scale image of the associated maximum dimensions of the blank body.

**2.** Blank according to claim 1, **characterized in that** an additional structure (11-14; 17-19; 31 - 33; 42 - 43; 52 - 53) corresponding to a unit of control information is designed via a function of at least two dimensions of at least two structures (11-14; 17-19; 31 - 33; 42 - 43; 52 - 53).

**3.** Blank according to claim 1 or 2, **characterized in that** the structure (11-14; 17-19; 31 - 33; 42 - 43; 52 - 53) has at least one surface (11'-14'; 81, 82), wherein the deviation in the position, dimensions, or dimensions, or type of surface (11'-14'; 81, 82) from a given reference surface (10, 15, 16, 30, 40, 40', 50) corresponds to a piece of analog information about the blank body (2).

**4.** Blank according to one of claims 1 through 3, **characterized in that** the blank has a holder (1) for the blank body (2) and that the structure is arranged on this holder (1).

**5.** Blank according to one of claims 1 through 4, **characterized in that** at least a part of the structures (31 - 33; 42 - 43; 52, 53) is arranged on the blank body (41).

**6.** Blank according to one of claims 1 through 5, **characterized in that** the blank comprises a holder and a blank body (41) and that, on the holder, a structure (31) is provided in which the position of at least an additional structure (32, 33, 42, 43, 52, 53) arranged on the blank body (41) is contained.

**7.** Blank according to one of claims 1 through 6, **characterized in that** the structure (32, 33, 42, 43, 52, 53) is designed with a different height, width or length or angular position than a reference surface.

**8.** Method for producing a dental formed part from a blank with a blank body (2; 41) made of tooth restoration material by means of a tool (6, 7) by removing material, wherein a touch process of the tool (6, 7) on the blank is provided in order to determine the position of the blank body (2) inserted into a processing machine, **characterized by**:

- determining at least one relevant size of the blank body (2), wherein, in order to determine the size, a coding, provided on the blank, with at least one geometrical structure, the dimensions of which reflect in an analog manner at least one maximum dimension of the blank body (2; 41) in accordance with a function, is detected, wherein the detected value is converted into a length specification using an analog, true-to-scale image independent of the touched blank;
- pre-positioning the processing tool for the touch process as a function of the determined size of the blank body (2; 41).

**9.** Method according to claim 8, **characterized in that** a limit of the touching path is provided as a function of the determined size of the blank body (2; 41).

**10.** Method according to claim 8 or 9, **characterized in that**, after a successful touch process and/or after processing the blank body (2; 41), a change of the structure (11-14; 17-19; 31-33; 42-43; 52-53) and/or a production of another structure takes place as part of the coding by the tool.

**11.** Method for producing a dental formed part from a blank with a blank body (2; 41) made of tooth restoration material by means of a tool (6, 7) by removing material, wherein a touch process of the tool (6, 7) on the blank is provided in order to determine the position of the blank body (2; 41) inserted into a processing machine, **characterized by**:

- determining at least one relevant size of the blank body (2), wherein, in order to determine the size, a coding, provided on the blank, with at least one geometrical structure, the dimensions of which reflect in an analog manner at least one maximum dimension of the blank body (2; 41) in accordance with a function, is detected, wherein the detected value is converted into a length specification using an analog, true-to-scale image independent of the touched blank;
- determining the paths, given during the processing, of the tools as a function of the determined size of the blank body (2; 41).

**12.** Method according to one of claims 8 through 11, **characterized in that** an additional structure (14, 32) is detected, which constitutes a unit of control information about the consistency of at least two additional structures (11-13; 17-19; 33; 42-43; 52-53).

**13.** Method according to claim 12, **characterized in that** the processing is aborted in case of incorrect control information.

**14.** Method according to one of claims 8 through 13, **characterized in that** the determination of at least one relevant size of the blank body (2; 41) is carried out by performing a touch process on a structure (32, 33; 42, 43; 52, 53) arranged on the blank body (2; 41) and containing a unit of analog information.

**15.** Method according to one of claims 8 through 14, **characterized in that** the position of the structure (33, 42, 43, 52, 53) arranged on the blank body (2; 41) is determined by detecting a structure (32) arranged on the blank body (2; 41).

## Revendications

**1.** Ébauche pour la fabrication de pièces façonnées de technique dentaire, dans laquelle l'ébauche présente un corps d'ébauche (2) en matériau de restauration dentaire, à partir duquel il est possible, au moyen d'un outil (6, 7), réaliser par enlèvement de matière la pièce façonnée à fabriquer, dans laquelle l'ébauche comporte un codage se présentant au moins sous la forme d'une structure géométrique (11-14 ; 17 - 19 ; 31 - 33 ; 42 - 43 ; 52 - 53) servant de support d'informations concernant les caractéristiques du corps d'ébauche (2), dans laquelle la structure est agencée dans l'ébauche de sorte que la dimension puisse se constater par balayage ou mesure de l'ébauche, **caractérisée en ce que** la dimension de la structure (11-14 ; 17-19 ; 31 - 33 ; 42 - 43 ; 52 - 53) est organisée de sorte que la valeur obtenue à la constatation corresponde à une information analogue concernant une caractéristique du corps d'ébauche (2), **en ce que** la dimension de la structure géométrique suivant une fonction mathématique prédéfinie correspond à au moins une dimension du corps d'ébauche (2) et la valeur est une représentation à l'échelle analogue de la dimension maximale attribuée du corps d'ébauche.

**2.** Ébauche selon la revendication 1, **caractérisée en ce qu'**une autre structure (11-14 ; 17-19 ; 31 - 33 ; 42 - 43 ; 52 - 53) est formée, de manière correspondant aux informations de contrôle sur une fonction, d'au moins deux dimensions d'au moins deux structures (11-14 ; 17-19 ; 31 - 33 ; 42 - 43 ; 52 - 53).

**3.** Ébauche selon la revendication 1 ou 2, **caractérisée en ce que** la structure (11-14 ; 17-19 ; 31 - 33 ; 42 - 43 ; 52 - 53) présente au moins une surface (11'-14' ; 81, 82), dans laquelle l'écart de position, de dimension ou de type de la surface (11'-14'; 81, 82) par rapport à une surface de référence prédéfinie (10, 15, 16, 30, 40, 40', 50) correspond à une information analogue sur le corps d'ébauche (2).

**4.** Ébauche selon une des revendications 1 à 3, **caractérisée en ce que** l'ébauche présente un support (1) pour le corps d'ébauche (2) et **en ce que** la structure est disposée sur ce support (1).

5. Ébauche selon une des revendications 1 à 4, **caractérisée en ce qu'**au moins une partie des structures (31 - 33 ; 42 - 43 ; 52 - 53) est disposée sur le corps d'ébauche (41).

6. Ébauche selon une des revendications 1 à 5, **caractérisée en ce que** l'ébauche comprend un support et un corps d'ébauche (41) et **en ce qu'**une structure (31) est prévue sur le support, dans laquelle est la position d'au moins une autre structure (32, 33, 42, 43, 52, 53) disposée sur le corps d'ébauche (41) est contenue.

7. Ébauche selon une des revendications 1 à 6, **caractérisée en ce que** la structure (32, 33, 42, 43, 52, 53) est réalisée à une hauteur, une largeur ou une longueur ou une position angulaire différente par rapport à une surface de référence.

8. Procédé de fabrication d'une pièce de dentisterie formée à partir d'une ébauche avec un corps d'ébauche (2 ; 41) en matériau de restauration dentaire au moyen d'un outil (6, 7) par enlèvement de matériau, dans lequel, pour constater la position du corps d'ébauche (2) introduit dans une machine de traitement, un processus de contact de l'outil (6, 7) sur l'ébauche est prévu, **caractérisé par** :

   - la constatation d'au moins une taille pertinente du corps d'ébauche (2), dans lequel, pour constater la taille, un codage prévu sur l'ébauche avec au moins une structure géométrique, dont la dimension reproduit, de manière correspondant à une fonction analogue, au moins une dimension maximale du corps d'ébauche (2 ; 41), est capturé, dans lequel la valeur capturée est transformée en utilisant une représentation à l'échelle analogue, indépendante de l'ébauche mise en contact, en une indication de longueur ;
   - le pré-positionnement de l'outil de traitement pour le processus de contact en fonction de la taille constatée du corps d'ébauche (2 ; 41).

9. Procédé selon la revendication 8, **caractérisé en ce qu'**une limite du trajet de calibrage est prévue en fonction de la taille déterminée du corps d'ébauche (2 ; 41).

10. Procédé selon la revendication 8 ou 9, **caractérisé en ce qu'**après la réussite du processus de calibrage et/ou après le traitement du corps d'ébauche (2 ; 41), une modification de la structure (11-14 ; 17-19 ; 31-33 ; 42-43 ; 52-53) et/ou une fabrication d'une autre structure est effectuée, sous forme d'une partie du codage, au moyen de l'outil.

11. Procédé de fabrication d'une pièce façonnée de technique dentaire à partir d'une ébauche avec un corps d'ébauche (2 ; 41) en matériau de restauration dentaire au moyen d'un outil (6, 7) par enlèvement de matériau, dans lequel, pour constater la position du corps d'ébauche (2 ; 41) introduit dans une machine de traitement, un processus de calibrage de l'outil (6, 7) sur l'ébauche est prévu, **caractérisé par** :

   - la constatation d'au moins une taille pertinente du corps d'ébauche (2), dans lequel, pour constater la taille, un codage prévu sur l'ébauche avec au moins une structure géométrique, dont la dimension reproduit, de manière correspondant à une fonction analogue, au moins une dimension maximale du corps d'ébauche (2 ; 41), est capturé, dans lequel la valeur capturée est transformée en utilisant une représentation à l'échelle analogue, indépendante de l'ébauche calibrée, en une indication de longueur ;
   - la détermination de la voie, prédéfinie pendant le traitement, de l'outil en fonction de la taille constatée du corps d'ébauche (2 ; 41).

12. Procédé selon une des revendications 8 à 11, **caractérisé en ce qu'**une autre structure (14, 32) est capturée, qui représente une information de contrôle sur la consistante d'au moins deux autres structures (11-13 ; 17-19 ; 33 ; 42-43 ; 52-53).

13. Procédé selon la revendication 12, **caractérisé en ce qu'**en cas d'information de contrôle erronée, une interruption du traitement ait lieu.

14. Procédé selon une des revendications 8 à 13, **caractérisé en ce que** la constatation d'au moins une taille pertinente du corps d'ébauche (2 ; 41) s'effectue par réalisation d'un processus de calibrage au niveau d'une structure (32, 33 ; 42, 43 ; 52, 53) contenant une information analogue, disposée sur le corps d'ébauche (2 ; 41).

15. Procédé selon une des revendications 8 à 14, **caractérisé en ce que** la position de la structure (33, 42, 43, 52, 53) disposée sur le corps d'ébauche (2 ; 41) est déterminée par capture d'une structure (32) disposée sur le corps d'ébauche (2 ; 41).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13A

Fig. 13B

Fig. 13C

Fig. 14A

Fig. 14B

Fig. 15A

Fig. 15B

Fig. 16A

Fig. 16B

**IN DER BESCHREIBUNG AUFGEFÜHRTE DOKUMENTE**

**In der Beschreibung aufgeführte Patentdokumente**

- EP 0160797 A
- DE 19612699
- DE 10330758 A1
- DE 102004063417 A1
- WO 9913796 A
- DE 19950780 A1